(19) Europäisches Patentamt
European Patent Office
Office européen des brevets

(11) **EP 4 633 241 A1**

(12) **EUROPEAN PATENT APPLICATION**
published in accordance with Art. 153(4) EPC

(43) Date of publication:
**15.10.2025 Bulletin 2025/42**

(21) Application number: **23910629.7**

(22) Date of filing: **26.12.2023**

(51) International Patent Classification (IPC):
*H04W 40/02* (2009.01)    *H04W 72/04* (2023.01)

(52) Cooperative Patent Classification (CPC):
**H04L 5/00; H04W 40/02; H04W 72/04;**
**H04W 72/0446; H04W 72/0453**

(86) International application number:
**PCT/CN2023/142020**

(87) International publication number:
**WO 2024/140706 (04.07.2024 Gazette 2024/27)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority:  **30.12.2022  CN 202211733757**

(71) Applicant: **Huawei Technologies Co., Ltd.**
**Shenzhen, Guangdong 518129 (CN)**

(72) Inventors:
• **WU, Yuandong**
  **Shenzhen, Guangdong 518129 (CN)**
• **RUAN, Liang**
  **Shenzhen, Guangdong 518129 (CN)**
• **GAO, Xinyu**
  **Shenzhen, Guangdong 518129 (CN)**
• **LIU, Kunpeng**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **COMMUNICATION METHOD AND APPARATUS**

(57)    This application discloses a communication method and apparatus. The method includes: A first network device sends first indication information to M second network devices to indicate time-frequency resources of N reference signals, $n_m$ pieces of beam weight information corresponding to each second network device, and an association relationship between the time-frequency resources of the N reference signals and the $n_m$ pieces of beam weight information. The first network device sends second indication information to a terminal device to indicate the time-frequency resources of the N reference signals. The first network device sends N first downlink reference signals on the time-frequency resources of the N reference signals, and the terminal device receives the N first downlink reference signals, obtains phase information through calculation, and sends the phase information to the first network device. The first network device sends phase compensation information to the second network device based on the phase information. In embodiments of this application, the phase compensation information is indicated to a plurality of second network devices, so that the plurality of second network devices perform cooperative transmission, to avoid or reduce signal cancellation, thereby achieving high efficiency in reflecting a signal by the second network device.

EP 4 633 241 A1

| First network device | Second network device | Terminal device |
|---|---|---|

201: First indication information, indicating time-frequency resources of N reference signals, $n_m$ pieces of beam weight information corresponding to each of M second network devices, and an association relationship between the time-frequency resources of the N reference signals and the $n_m$ pieces of beam weight information corresponding to each second network device

202: Second indication information, indicating the time-frequency resources of the N reference signals

203: Generate $n_m$ beam weights based on the first indication information

204: Send N first downlink reference signals on the time-frequency resources of the N reference signals

205: Determine phase information based on the N first downlink reference signals

206: Phase information

207: Phase compensation information

FIG. 2A

## Description

This application claims priority to Chinese Patent Application No. 202211733757.2, filed with the China National Intellectual Property Administration on December 30, 2022 and entitled "COMMUNICATION METHOD AND APPARATUS", which is incorporated herein by reference in its entirety.

## TECHNICAL FIELD

This application relates to the field of wireless communication technologies, and in particular, to a communication method and apparatus.

## BACKGROUND

Some devices that can reflect a signal, such as an intelligent reflecting surface (intelligent reflecting surface, IRS), can reflect, by adjusting phase distribution on a reflecting surface, a signal transmitted from a base station (base station, BS) to the IRS to an expected direction, to implement functions such as improving a channel environment in a weak coverage region and changing non-line-of-sight (non-line-of-sight, NLOS) to line-of-sight (line-of-sight, LOS). In addition, the IRS includes only a passive antenna panel and a terminal module configured to receive control signaling of the base station, so that power consumption and costs of the IRS are excessively low, and the IRS is a cost-effective solution for enhancing network coverage. Therefore, the IRS is regarded as one of the key technologies of a next generation mobile communication network.

A reflection gain of the IRS is from the large-sized antenna panel. The large-sized antenna panel needs to be installed against a large flat wall. This imposes an excessively strict requirement on an installation environment. If the IRS is installed on a pole, an installation area requirement is reduced, but an excessively large frontal area of the IRS panel shortens a service life of the device and affects device stability. In addition, installation of the large-sized antenna panel easily causes great visual impact on the public and public opinion pressure on IRS deployment.

## SUMMARY

Embodiments of this application provide a communication method and apparatus, to implement a signal reflection process by using a plurality of distributed second network devices. In addition, phase compensation information is indicated to the plurality of second network devices, so that the plurality of second network devices perform cooperative transmission, to avoid or reduce signal cancellation.

According to a first aspect, a communication method is provided. The method may be performed by a network device, or may be performed by a chip used in the network device. The following provides descriptions by using an example in which the method is performed by the network device. The method includes the following steps.

A first network device sends first indication information to M second network devices, where the first indication information indicates time-frequency resources of N reference signals, $n_m$ pieces of beam weight information corresponding to each of the M second network devices, and an association relationship between the time-frequency resources of the N reference signals and the $n_m$ pieces of beam weight information, where the association relationship indicates that weights of the second network device on the time-frequency resources of the N reference signals are respectively the $n_m$ beam weights; and M, $n_m$, m, and N are positive integers, m is less than or equal to M and greater than 1, M is greater than 1 and less than or equal to N, and $n_m$ is less than or equal to N; the first network device sends second indication information to a terminal device, where the second indication information indicates the time-frequency resources of the N reference signals; and the first network device sends N first downlink reference signals on the time-frequency resources of the N reference signals, receives phase information from the terminal device, and sends phase compensation information to the M second network devices based on the phase information, where the phase information is determined by the terminal device based on the N first downlink reference signals; or the first network device receives N first uplink reference signals sent by the terminal device on the time-frequency resources of the N reference signals, and sends phase compensation information to the M second network devices based on the N first uplink reference signals.

It can be learned that, in this embodiment of this application, for a case in which a plurality of distributed second network devices reflect signals, the first network device sends the N first downlink reference signals to obtain a phase difference between different second network devices through measurement, so that accuracy of sending a signal at a specified time-frequency resource position can be ensured, and a measurement error can be reduced. Alternatively, the terminal device sends the N first uplink reference signals to obtain a phase difference between different second network devices through measurement, so that the terminal device can send an uplink reference signal in a timely manner when receiving the second indication information, thereby ensuring reliability of a communication process. In addition, the terminal device sends the uplink reference signal, so that operation pressure on the terminal device side is reduced, and overheads of the terminal device for feeding back the phase information is reduced. Then, the phase compensation information is sent to the second network device, so that the second network device performs phase compensation, to avoid or reduce signal cancellation, thereby implementing cooperative transmission between the plurality of second network devices. In this way, signal transmission efficiency is improved while arrangement costs of the second network device are controlled.

In a possible design, sending the phase compensation information to the M second network devices includes: sending, to L second network devices in the M second network devices, phase compensation information corresponding to the L second network devices, where L is an integer not greater than M.

In this embodiment, the phase compensation information is sent to each second network device in a point-to-point sending manner, so that consumption of sending a resource can be reduced, and resources and time consumed for receiving and obtaining the phase compensation information by the second network device can be reduced, thereby improving efficiency of sending the phase compensation information.

In a possible design, there are a total of T groups of phase information reported by the terminal device, and before sending the phase compensation information to the M second network devices based on the phase information, the method further includes: The first network device receives feedback information from the terminal device, where the feedback information includes a first association relationship between each group of the T groups of phase information and at least two of the first downlink reference signals; or the first network device sends third indication information to the terminal device, where the third indication information indicates a first association relationship between each group of the T groups of phase information reported by the terminal device and at least two of the first downlink reference signals, where T is a positive integer.

In this embodiment of this application, the second network device sends the feedback information to the first network device, to describe the first association relationship between each group of the T groups of phase information and at least two of the first downlink reference signals, so that the first network device determines, based on the first association relationship and information included in the first network device, the phase compensation information corresponding to each second network device. This ensures efficiency and accuracy of determining the phase compensation information by the first network device.

Alternatively, in this embodiment of this application, the first network device sends the third indication information to the second network device, to indicate the first association relationship between each group of the T groups of phase information and at least two of the first downlink reference signals, so that the second network device reports the phase information based on the preset first association relationship. This can improve efficiency of the first network device in learning the first association relationship, determining a second association relationship based on the first association relationship, and determining phase compensation information corresponding to each second network device, and further ensures efficiency and accuracy of determining the phase compensation information by the first network device.

In a possible design, after the first network device sends the N first downlink reference signals on the time-frequency resources of the N reference signals, the method further includes: The first network device sends frequency indication information to the terminal device, where the frequency indication information indicates an association relationship between each phase in each group of the T groups of phase information and a frequency unit of the first downlink reference signal.

In this embodiment of this application, the terminal device sends, based on an association relationship that is between ambiguous phase information and the frequency unit and that is indicated by the first network device, the ambiguous phase information obtained through calculation to the first network device, and the first network device performs more subsequent processing processes to finally determine the phase compensation information of the second network device. In this process, accuracy of the phase information obtained by the first network device can be improved, and processing power consumption of the terminal device can be reduced. Generally, the first network device has a stronger processing capability. Therefore, in this process, efficiency of obtaining the phase compensation information of the second network device can be further improved.

In a possible design, the $n_m$ pieces of beam weight information indicated by the first network device to the second network device may further include weight initial phase information. The information of the beam weights is sent in at least one of the following manners: sending beam weight index information and index information of the weight initial phase information; sending beam weight quantization information and index information of the weight initial phase information; sending beam weight index information and quantization information of the weight initial phase information; sending beam weight quantization information and quantization information of the weight initial phase information; sending beam weight index information; sending beam weight quantization information; sending quantization information of the weight initial phase information; or sending index information of the weight initial phase information.

In this embodiment of this application, the beam weight index information indicates the beam weight information, or the index information of the weight initial phase information indicates the weight initial phase information, so that extremely few resource overheads may be used for indicating information with more content, thereby reducing transmission resource consumption. The beam weight quantization information indicates the beam weight information, or the quantization information of the weight initial phase information indicates the weight initial phase information, so that accuracy of indicated content can be improved. In a manner of combining the beam weight index information and the quantization information of the weight initial phase information, or in a manner of combining the beam weight quantization information and the index information of the weight initial phase information, transmission resource consumption can be partially reduced, and in addition, accuracy of indicated content can be partially improved, so that a better balance is achieved between the transmission resource consumption reducing and the indicated content accuracy improving.

In a possible design, the $n_m$ pieces of beam weight information corresponding to at least one of the M second network devices include at least one piece of beam weight information indicated in an idle mode.

In this embodiment of this application, information of a beam weight is indicated in an idle mode. Therefore, when only a reflection result of information of a beam weight of a single second network device on a signal needs to be obtained, impact that may be caused by another second network device on the signal can be excluded. In addition, a calculation process of obtaining the phase information can be simplified, thereby improving efficiency and accuracy of calculating the phase information.

In a possible design, before the first network device sends the N first downlink reference signals on the time-frequency resources of the N reference signals, the method further includes: The first network device sends fourth indication information to the terminal device, where the fourth indication information indicates second weight initial phase information corresponding to time-frequency resources of the N downlink reference signals.

That the phase information is determined by the terminal device based on the N first downlink reference signals includes: The phase information is determined by the terminal device based on the N first downlink reference signals and the second weight initial phase information.

In this embodiment of this application, the first network device indicates the weight initial phase information corresponding to the second network device, so that when the terminal device obtains, through calculation based on the received first downlink reference signal, phase information between signals reflected to the terminal device by using different second network devices, the terminal device performs calculation with reference to the weight initial phase information corresponding to the second network device. This can ensure feasibility of a phase information calculation process when first downlink signals reflected by a plurality of second network devices affect each other, and improve efficiency of obtaining the phase information.

In a possible design, a difference between positions of any two time domain resources in the time-frequency resources of the N reference signals is less than a first time interval, and the first time interval is determined based on coherence time of the first network device.

In this embodiment of this application, a maximum difference between sending times of the N reference signals is less than the coherence time, so that segmented channels between every two of a base station, the second network device, and the terminal device on the time-frequency resources of the N reference signals are considered as a same channel, thereby avoiding interference. In this way, a difference between a calculated phase difference and an actual phase difference is reduced.

In a possible design, before the first network device sends the first indication information to the M second network devices, the method further includes:

The first network device receives capability information reported by the second network device, and determines the M second network devices based on the capability information, where the capability information indicates a capability of performing cooperative transmission by the second network device, and the capability of performing cooperative transmission is determined based on at least one of the following: panel information or physical position information of the second network device.

In this embodiment of this application, the first network device preliminarily determines, by obtaining the capability information reported by the second network device, the M second network devices that can perform cooperative transmission, and then performs a subsequent step to determine the phase compensation information of the M second network devices. In this way, a process in which the first network device calculates phase compensation information of a second network device that does not meet a cooperative transmission requirement can be reduced, and efficiency of implementing cooperative transmission by the M second network devices can be improved.

In a possible design, the first indication information, the second indication information, the third indication information, the fourth indication information, the frequency indication information, and/or the phase compensation information are/is carried in at least one of the following signaling: radio resource control RRC signaling, downlink control information DCI signaling, a medium access control-control element MAC-CE, and a physical downlink shared channel PDSCH.

According to a second aspect, a communication method is provided. The method may be performed by a network device, or may be performed by a chip used in the network device. The following provides descriptions by using an example in which the method is performed by the network device. The method includes the following steps.

A second network device receives first indication information from a first network device, where the first indication information indicates time-frequency resources of N reference signals, $n_m$ pieces of beam weight information, and an association relationship between the time-frequency resources of the N reference signals and the $n_m$ pieces of beam weight information, where the association relationship indicates that weights of the second network device on the time-frequency resources of the N reference signals are respectively the $n_m$ beam weights; and M, $n_m$, and N are positive integers, m is less than or equal to M and greater than 1, M is greater than 1 and less than or equal to N, and $n_m$ is less than or equal to N; the second network device generates the $n_m$ beam weights based on the first indication information; and the second network device receives phase compensation information from the first network device.

In a possible design, the $n_m$ pieces of beam weight information indicated by the first indication information further include weight initial phase information. The $n_m$ pieces of beam weight information are indicated in at least one of the following manners: initial beam weight index information and index information of the weight initial phase information; initial beam weight quantization information and index information of the weight initial phase information; initial beam weight index information and quantization information of the weight initial phase information; initial beam weight quantization information and quantization information of the weight initial phase information; beam weight index information; beam weight quantization information; quantization information of the weight initial phase information; or index information of the weight initial phase information.

In a possible design, the $n_m$ pieces of beam weight information include at least one piece of beam weight information indicated in an idle mode

In a possible design, before the second network device receives the first indication information sent by the first network device, the method further includes: The second network device reports capability information to the first network device, where the capability information indicates a capability of performing cooperative transmission by the second network device, and the capability of performing cooperative transmission is determined based on at least one of the following: panel information or physical position information of the second network device.

According to a third aspect, a communication method is provided. The method may be performed by a terminal device, or may be performed by a chip used in the terminal device. The following provides descriptions by using an example in which the method is performed by the terminal device. The method includes: A terminal device receives second indication information, where the second indication information indicates time-frequency resources of N reference signals; the terminal device receives N first downlink reference signals sent by a first network device on the time-frequency resources of the N reference signals; the terminal device obtains phase information through calculation based on the N first downlink reference signals; and the terminal device sends the phase information to the first network device, so that the first network device determines, based on the phase information, phase compensation information sent by the M second network devices.

In a possible design, there are T groups of phase information includes, and sending the phase information to the first network device further includes: sending feedback information to the first network device, where the feedback information includes a first association relationship between each group of the T groups of phase information and at least two of the first downlink reference signals; or receiving third indication information from the first network device, and reporting the phase information based on a first association relationship that is indicated by the third indication information and that is between each group of the phase information and at least two of the first downlink reference signals. The first association relationship is used by the first network device to determine a second association relationship between each group of the T groups of phase information and two second network devices.

In a possible design, after the terminal device receives the N first downlink reference signals from the first network device, the method further includes: The terminal device receives frequency indication information from the first network device, where the frequency indication information indicates an association relationship between each phase in each group of the T groups of phase information and a frequency unit of the first downlink reference signal.

In a possible design, before the terminal device receives the N first downlink reference signals from the first network device, the method further includes: The terminal device receives fourth indication information from the first network device, where the fourth indication information indicates second weight initial phase information corresponding to time-frequency resources of the N downlink reference signals. That the terminal device obtains the phase information through calculation based on the N first downlink reference signals includes: The terminal device obtains the phase information through calculation based on the N first downlink reference signals and the second weight initial phase information.

According to a fourth aspect, a communication apparatus is provided. The communication apparatus includes a module or a unit configured to implement the method according to any one of the first aspect or the possible designs of the first aspect. The module or the unit may be a hardware circuit, may be software, or may be implemented by the hardware circuit in combination with the software. The communication apparatus may be a network device, or may be an apparatus (for example, a chip, a chip system, or a circuit) in the network device or an apparatus that can be used together with the network device. The apparatus includes:

a transceiver unit, configured to send first indication information to M second network devices, where the first indication information indicates time-frequency resources of N reference signals, $n_m$ pieces of beam weight information corresponding to each of the M second network devices, and an association relationship between the time-frequency resources of the N reference signals and the $n_m$ pieces of beam weight information, where the association relationship indicates that weights of the second network device on the time-frequency resources of the N reference signals are respectively the $n_m$ beam weights; and M, $n_m$, m, and N are positive integers, m is less than or equal to M and greater than 1, M is greater than 1 and less than or equal to N, and $n_m$ is less than or equal to N.

The transceiver unit is further configured to send second indication information to a terminal device, where the second indication information indicates the time-frequency resources of the N reference signals.

The transceiver unit is further configured to: send N first downlink reference signals on the time-frequency resources of the N reference signals, receive phase information from the terminal device, and send phase compensation information to the M second network devices based on the phase information, where the phase information is determined by the terminal device based on the N first downlink reference signals; or

the transceiver unit, configured to: receive N first uplink reference signals sent by the terminal device on the time-frequency resources of the N reference signals, and send phase compensation information to the M second network devices based on the N first uplink reference signals.

In a possible design, sending the phase compensation information to the M second network devices includes: sending, to L second network devices in the M second network devices, phase compensation information corresponding to the L second network devices, where L is an integer not greater than M.

In a possible design, there are a total of T groups of phase information reported by the terminal device, and before sending the phase compensation information to the M second network devices based on the phase information, the transceiver unit is further configured to: receive feedback information from the terminal device, where the feedback information includes a first association relationship between each group of the T groups of phase information and at least two of the first downlink reference signals; or the transceiver unit sends third indication information to the terminal device, where the third indication information indicates a first association relationship between each group of the T groups of phase information reported by the terminal device and at least two of the first downlink reference signals, where T is a positive integer.

In a possible design, after the first network device sends the N first downlink reference signals on the time-frequency resources of the N reference signals, the transceiver unit is further configured to send frequency indication information to the terminal device, where the frequency indication information indicates an association relationship between each phase in each group of the T groups of phase information and a frequency unit of the first downlink reference signal.

In a possible design, the $n_m$ pieces of beam weight information indicated by the first network device to the second network device further includes weight initial phase information. The information of the beam weights is sent in at least one of the following manners: sending beam weight index information and index information of the weight initial phase information; sending beam weight quantization information and index information of the weight initial phase information; sending beam weight index information and quantization information of the weight initial phase information; sending beam weight quantization information and quantization information of the weight initial phase information; sending beam weight index information; sending beam weight quantization information; sending quantization information of the weight initial phase information; or sending index information of the weight initial phase information.

In a possible design, the $n_m$ pieces of beam weight information corresponding to at least one of the M second network devices include at least one piece of beam weight information indicated in an idle mode.

In a possible design, before the first network device sends the N first downlink reference signals on the time-frequency resources of the N reference signals, the transceiver unit is further configured to send fourth indication information to the terminal device, where the fourth indication information indicates second weight initial phase information corresponding to time-frequency resources of the N downlink reference signals. That the phase information is determined by the terminal device based on the N first downlink reference signals includes: The phase information is determined by the terminal device based on the N first downlink reference signals and the second weight initial phase information.

In a possible design, a difference between positions of any two time domain resources in the time-frequency resources of the N reference signals is less than a first time interval, and the first time interval is determined based on coherence time of the first network device.

In a possible design, the communication apparatus further includes a processing unit. Before the first network device sends the first indication information to the M second network devices, the transceiver unit is further configured to receive capability information reported by the second network device. The processing unit is configured to determine the M second network devices based on the capability information, where the capability information indicates a capability of performing cooperative transmission by the second network device, and the capability of performing cooperative transmission is determined based on at least one of the following: panel information or physical position information of the second network device.

In a possible design, the first indication information, the second indication information, the third indication information, the fourth indication information, the frequency indication information, and/or the phase compensation information are/is carried in at least one of the following signaling: radio resource control RRC signaling, downlink control information DCI signaling, a medium access control-control element MAC-CE, and a physical downlink shared channel PDSCH.

According to a fifth aspect, a communication apparatus is provided. The communication apparatus includes a module or a unit configured to implement the method according to any one of the second aspect or the possible designs of the second aspect. The module or the unit may be a hardware circuit, may be software, or may be implemented by the hardware circuit in combination with the software. The communication apparatus may be a network device, or may be an apparatus (for example, a chip, a chip system, or a circuit) in the network device or an apparatus that can be used together with the network device. The apparatus includes:

a transceiver unit, configured to receive first indication information from a first network device, where the first indication information indicates time-frequency resources of N reference signals, $n_m$ pieces of beam weight information, and an association relationship between the time-frequency resources of the N reference signals and the $n_m$ pieces of beam weight information, where the association relationship indicates that weights of the second network device on the time-frequency resources of the N reference signals are respectively the $n_m$ beam weights; and M, $n_m$, and N are positive integers, m is less than or equal to M and greater than 1, M is greater than 1 and less than or equal to N, and $n_m$ is less than or equal to N; and

a processing unit, configured to generate the $n_m$ beam weights based on the first indication information.

The transceiver unit is further configured to receive phase compensation information from the first network device.

In a possible design, the $n_m$ pieces of beam weight information indicated by the first indication information further include weight initial phase information. The $n_m$ pieces of beam weight information are indicated in at least one of the following manners: initial beam weight index information and index information of the weight initial phase information; initial beam weight quantization information and index information of the weight initial phase information; initial beam weight index information and quantization information of the weight initial phase information; initial beam weight quantization information and quantization information of the weight initial phase information; beam weight index information; beam weight quantization information; quantization information of the weight initial phase information; or index information of the weight initial phase information.

In a possible design, the $n_m$ pieces of beam weight information include at least one piece of beam weight information indicated in an idle mode.

In a possible design, before the second network device receives the first indication information sent by the first network device, the transceiver unit is further configured to report capability information to the first network device, where the capability information indicates a capability of performing cooperative transmission by the second network device, and the capability of performing cooperative transmission is determined based on at least one of the following: panel information or physical position information of the second network device.

According to a sixth aspect, a communication apparatus is provided. The communication apparatus includes a module or a unit configured to implement the method according to any one of the third aspect or the possible designs of the third aspect. The module or the unit may be a hardware circuit, may be software, or may be implemented by the hardware circuit in combination with the software. The communication apparatus may be a terminal device, or may be an apparatus (for example, a chip, a chip system, or a circuit) in the terminal device or an apparatus that can be used together with the terminal device. The apparatus includes:

a transceiver unit, configured to receive second indication information to a terminal device, where the second indication information indicates the time-frequency resources of the N reference signals, where

the transceiver unit is further configured to receive N first downlink reference signals sent by a first network device on the time-frequency resources of the N reference signals; and

a processing unit, configured to obtain phase information through calculation based on the N first downlink reference signals.

The transceiver unit is configured to send the phase information to the first network device.

In a possible design, there are T groups of phase information, and sending the phase information to the first network device further includes: sending feedback information to the first network device, where the feedback information includes a first association relationship between each group of the T groups of phase information and at least two of the first downlink reference signals; or receiving third indication information from the first network device, and reporting the phase information based on a first association relationship that is indicated by the third indication information and that is between each group of the phase information and at least two of the first downlink reference signals. The first association relationship is used by the first network device to determine a second association relationship between each group of the T groups of phase information and two second network devices.

In a possible design, after the terminal device receives the N first downlink reference signals from the first network device, the transceiver unit is further configured to receive frequency indication information from the first network device, where the frequency indication information indicates an association relationship between each phase in each group of the T groups of phase information and a frequency unit of the first downlink reference signal.

In a possible design, before the terminal device receives the N first downlink reference signals from the first network device, the transceiver unit is further configured to receive fourth indication information from the first network device, where the fourth indication information indicates second weight initial phase information corresponding to time-frequency resources of the N downlink reference signals. That the terminal device obtains the phase information through calculation based on the N first downlink reference signals includes: The terminal device obtains the phase information through calculation based on the N first downlink reference signals and the second weight initial phase information.

According to a seventh aspect, a communication apparatus is provided, including a processor. The processor is configured to perform, by executing computer instructions or through a logic circuit, the method according to any one of the first aspect or the possible designs of any one of the first aspect; or to perform the method according to any one of the second aspect or the possible designs of any one of the second aspect.

In a possible design, the communication apparatus includes a memory, configured to store the computer instructions. Optionally, the memory and the processor are integrated together.

In a possible design, the communication apparatus further includes a transceiver. The transceiver is configured to receive a signal and/or send a signal, and the signal may carry signaling or data.

The communication apparatus is a network device or an apparatus in the network device.

According to an eighth aspect, a communication apparatus is provided, including a processor. The processor is configured to perform, by executing computer instructions or through a logic circuit, the method according to any one of the third aspect or the possible designs of any one of the third aspect.

In a possible design, the communication apparatus includes a memory, configured to store the computer instructions. Optionally, the memory and the processor are integrated together.

In a possible design, the communication apparatus further includes a transceiver. The transceiver is configured to receive a signal and/or send a signal, and the signal may carry signaling or data.

The communication apparatus is a terminal device or an apparatus in the terminal device.

According to a ninth aspect, an embodiment of this application provides a chip system, including a processor. The processor is coupled to a memory, and the memory is configured to store a program or instructions. When the program or the instructions are executed by the processor, the chip system is enabled to implement the method according to any one of the first aspect, the second aspect, or the third aspect.

Optionally, the chip system further includes an interface circuit, and the interface circuit is configured to exchange computer instructions to the processor.

Optionally, there may be one or more processors in the chip system, and the processor may be implemented by using hardware or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

According to a tenth aspect, an embodiment of this application provides a computer-readable storage medium. The computer-readable storage medium stores a computer program or instructions. When the computer program or the instructions are executed, a computer is enabled to perform the method according to any one of the first aspect to the third aspect.

According to an eleventh aspect, an embodiment of this application provides a computer program product. When a computer reads and executes the computer program product, the computer is enabled to perform the method according to any one of the possible implementations of the first aspect to the third aspect.

According to a twelfth aspect, an embodiment of this application provides a communication system. The communication system includes the apparatus according to the first aspect, the second aspect, and/or the third aspect.

## BRIEF DESCRIPTION OF DRAWINGS

To describe technical solutions of embodiments of this application more clearly, the following briefly describes the accompanying drawings used in embodiments.

FIG. 1A is a diagram of a network architecture including a signal reflection process according to an embodiment of this application;

FIG. 1B is a diagram of an IRS installation manner according to an embodiment of this application;

FIG. 2A is a flowchart of a communication method according to an embodiment of this application;

FIG. 2B is a diagram of cooperative transmission between two IRSs according to an embodiment of this application;

FIG. 2C is a flowchart of obtaining phase information according to an embodiment of this application;

FIG. 2D is a diagram of an association relationship for phase information according to an embodiment of this application;

FIG. 2E is a flowchart of obtaining phase information according to an embodiment of this application;

FIG. 3 is a flowchart of another communication method according to an embodiment of this application;

FIG. 4 is a diagram of a structure of a communication apparatus according to an embodiment of this application; and

FIG. 5 is a diagram of a hardware structure of a communication apparatus according to an embodiment of this application.

## DESCRIPTION OF EMBODIMENTS

In the specification, claims, and accompanying drawings of this application, the terms "first", "second", "third", "fourth" and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in the specification indicates that a particular feature, structure, or characteristic described with reference to this embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

"A plurality of" means two or more. The term "and/or" describes an association relationship between associated objects and represents that three relationships may exist. For example, A and/or B may represent the following three cases: Only A exists, both A and B exist, and only B exists. The character "/" generally indicates an "or" relationship between the associated objects.

First, a network architecture in embodiments of this application is described with reference to the figures.

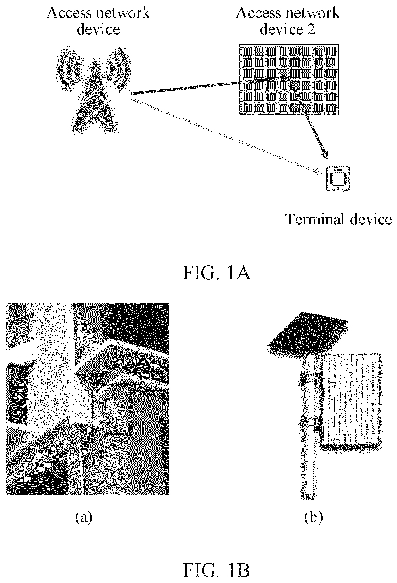

FIG. 1A is a diagram of a network architecture including a signal reflection process according to an embodiment of this application. As shown in FIG. 1A, the network architecture includes an access network device, a terminal device, and an access network device 2.

A terminal device (terminal equipment) may also be referred to as a terminal, user equipment (user equipment, UE), a mobile station (mobile station, MS), a mobile terminal (mobile terminal, MT), or the like. The terminal device may be a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

An access network device is a radio access network (radio access network, RAN) node (or device) that connects a terminal to a wireless network, and may also be referred to as a base station. Currently, examples of some RAN nodes are: a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or home NodeB, HNB), a baseband unit (baseband unit, BBU), a wireless fidelity (wireless fidelity, Wi-Fi) access point (access point, AP), or the like.

The access network device 2 is a device that can reflect, by adjusting phase distribution on a reflective surface, a signal transmitted by a base station or a terminal device to the reflective surface to an expected direction. In addition, the access network device 2 may have all or some functions of the foregoing access network device. The access network device 2 may be specifically an IRS, a network-controlled repeater (network-controlled repeater), or the like. The access network device 2 includes an antenna panel for reflecting a signal, and further includes a terminal module configured to receive and execute control signaling.

In this embodiment of this application, an example in which the access network device 2 is an IRS is used for description. The IRS is a large-scale antenna array including a large quantity of reconfigurable passive elements. Each element can independently cause a phase shift of an incident signal, to cooperatively change propagation of a reflected signal. In other words, a reflection gain of the IRS is from the large-sized antenna panel. Currently, wall-mounted installation shown in (a) in FIG. 1B and pole-mounted installation shown in (b) in FIG. 1B may be used. In the two installation modes, a large flat wall is needed in the former mode. This imposes an excessively strict requirement on an installation environment. An installation area requirement is reduced in the latter mode, but an excessively large frontal area of the IRS panel shortens a service life of the device and affects device stability. In addition, installation of the large-sized antenna panel easily causes great visual impact on the public and public opinion pressure on IRS deployment.

The large-sized IRS is split into several smaller IRS panels. Smaller IRSs can be installed in different positions to reduce the requirement on the installation environment and the visual impact on the public. In addition, when the several smaller IRSs are installed on a pole, a frontal area of each IRS can be reduced, thereby reducing abrasion of the IRS caused by the natural environment and improving working stability of the IRS.

However, there is a displacement between the several small-sized IRSs. As a result, a phase difference is generated between signals reflected by a BS to UE through the several IRSs because of different propagation path lengths. When a phase is reversed, signals between several IRSs may be canceled, preventing the UE from benefiting from the gain of the IRS.

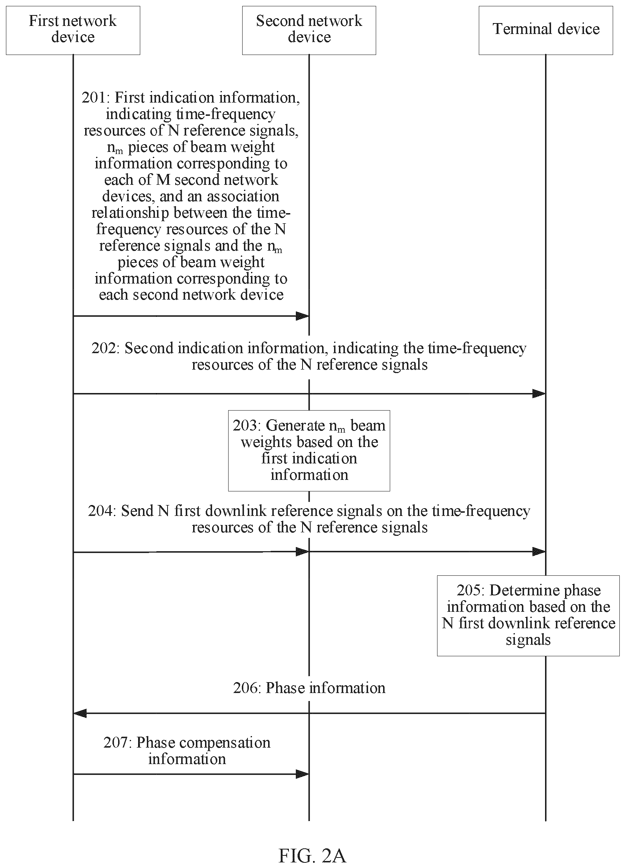

Based on this, an embodiment of this application provides a communication method. FIG. 2A is a flowchart of a communication method according to an embodiment of this application. As shown in FIG. 2A, the method includes the following steps.

201: A first network device sends first indication information to M second network devices, where the first indication information indicates time-frequency resources of N reference signals, $n_m$ pieces of beam weight information corresponding to each of the M second network devices, and an association relationship between the time-frequency resources of the N reference signals and the $n_m$ pieces of beam weight information corresponding to each second network device.

The association relationship indicates that weights of the second network device on the time-frequency resources of the N reference signals are respectively the $n_m$ beam weights; and M, $n_m$, and N are positive integers, M is greater than 1 and less than or equal to N, and $n_m$ is less than or equal to N.

The first network device in this embodiment of this application corresponds to the access network device shown in FIG. 1A, and the second network device corresponds to the access network device 2 in FIG. 1A. In other words, the first network device, the second network device, and the terminal device in this embodiment of this application form the network architecture shown in FIG. 1A. An example in which the second network device is an IRS is used for description in this embodiment of this application. It should be understood that the second network device may alternatively be another network device, for example, a base station having an IRS, or a base station or a network element having an IRS function, a base station or another network element that implements a signal reflection function, or another network element that receives indication information from a network device and completes phase adjustment, processing, and sending. In addition, a difference from FIG. 1A lies in that the network architecture in this embodiment of this application includes M distributed second network devices, and the M second network devices are configured to cooperatively reflect a signal sent by the first network device or the terminal device. In this embodiment of this application, that a plurality of second network devices can perform cooperative transmission means that signals from the plurality of second network devices to the terminal device are enhanced through constructive phase superposition and energy superposition.

For example, before the first network device sends the first indication information to the M second network devices, the method further includes: The first network device performs beam management on several second network devices, and selects, based on a beam management result, the M second network devices to perform cooperative transmission. The selection based on the beam management result may be selecting the M second network devices whose beam gains in a direction of the terminal device are greater than a preset threshold.

For example, before the first network device sends the first indication information to the M second network devices, the method further includes: The first network device receives capability information reported by the second network device, and determines the M second network devices based on the capability information, where the capability information indicates a capability of performing cooperative transmission by the second network device, and the capability of performing cooperative transmission is determined based on at least one of the following: panel information or physical position information of the second network device.

That the first network device receives the capability information reported by the second network device includes: receiving capability information that is of all second network devices in a group of second network devices and that is reported by one second network device (or some second network devices) of the group of second network devices, or receiving capability information that is reported by each of a plurality of second network devices. For the former case, the group of second network devices may have a specific association relationship, and have same or corresponding capability information, and only one (or some) of the second network devices is (or are) needed to complete reporting of the capability information of all the second network devices in the group. In this case, after receiving the capability information of the group of second network devices, the first network device may determine whether all the second network devices in the group of second network devices can perform cooperative transmission. For the latter case, each second network device reports respective capability information, and the first network device sequentially determines whether each second network device can perform cooperative transmission with another second network device.

The capability information may include panel information of the second network device, for example, a panel size and a panel direction, and may further include physical position information of the second network device. The first network device determines, based on the foregoing information, whether the second network devices meet a requirement for cooperative transmission between the second network devices.

The first indication information sent by the first network device to the M second network devices includes the time-frequency resources of the N reference signals, the $n_m$ pieces of beam weight information corresponding to each of the M second network devices, and the association relationship between the time-frequency resources and the $n_m$ pieces of beam weight information corresponding to each second network device. The N time-frequency resources are non-overlapping time-frequency resources. Each second network device corresponds to the $n_m$ pieces of beam weight information, and $1 \leq m \leq M$, indicating that each second network device has a quantity of pieces of beam weight information separately corresponding to the second network device. The quantity may be a same value, or may be different values.

In a case, $n_m$ may be equal to N, indicating that each second network device is indicated with N pieces of beam weight information. For details, refer to Table 1.

Table 1

| Time-fre-quency re-sources of N refer-ence sig-nals | | N beam weights of M second network devices | | | | |
|---|---|---|---|---|---|---|
| | | Second net-work device 1 | Second net-work device 2 | Second net-work device 3 | ... | Second net-work device M |
| | (Time domain 1, frequency domain 1) | Beam weight 11 | Beam weight 12 | Beam weight 13 | ... | Beam weight 1M |
| | (Time domain 2, frequency domain 2) | Beam weight 21 | Beam weight 22 | Beam weight 23 | ... | Beam weight 2M |
| | (Time domain 3, frequency domain 3) | Beam weight 31 | Beam weight 32 | Beam weight 33 | ... | Beam weight 3M |
| | ... | ... | | | | |
| | (Time domain N, frequency domain N) | Beam weight N1 | Beam weight N2 | Beam weight N3 | ... | Beam weight NM |

As shown in Table 1, the time-frequency resources of the N reference signals may be directly associated with N pieces of beam weight information of each of the M second network devices, and a time-frequency resource of each reference signal corresponds to a group of beam weight information including one piece of beam weight information of each of the M second network devices. For example, a group of beam weight information includes {a beam weight 11, a beam weight 12, a beam weight 13, ..., and a beam weight 1M}.

Alternatively, the time-frequency resource may be indirectly associated with N pieces of beam weight information of the M second network devices. For example, the time-frequency resources of the N reference signals are numbered as {a time-frequency resource 1, a time-frequency resource 2, ..., and a time-frequency resource N}, and each group of beam weight information is associated with one time-frequency resource number. For details, refer to Table 2.

Table 2

| Time-frequency resource numbers of N reference signals | N beam weights of M second network devices | | | | |
|---|---|---|---|---|---|
| | | Second network device 1 | Second network device 2 | Second network device 3 | ... | Second network device M |
| | Time-frequency resource 1 | Beam weight 11 | Beam weight 12 | Beam weight 13 | ... | Beam weight 1M |
| | Time-frequency resource 2 | Beam weight 21 | Beam weight 22 | Beam weight 23 | ... | Beam weight 2M |
| | Time-frequency resource 3 | Beam weight 31 | Beam weight 32 | Beam weight 33 | ... | Beam weight 3M |
| | ... | ... | | | | |
| | Time-frequency resource N | Beam weight N1 | Beam weight N2 | Beam weight N3 | ... | Beam weight NM |

As shown in Table 2, a number of each time-frequency resource is associated with one group of beam weight information of the M second network devices.

Alternatively, each group of beam weight information corresponding to the M second network devices may be numbered, for example, numbered as {a beam weight group 1, a beam weight group 2, ..., and a beam weight group N}, where the beam weight group 1={a beam weight 11, a beam weight 12, a beam weight 13, ..., and a beam weight 1M}, and so on, to complete numbering of each group of beam weight information. Then, the number of the beam weight information is associated with the number of the time-frequency resource, to also represent an association relationship between the time-frequency resources of the N reference signals and the N pieces of beam weight information. A specific table correspondence is not described herein again.

In some cases, the first network device may not indicate the beam weight information of the second network device on some time-frequency resources. To be specific, $n_m$ may be less than N, and quantities $n_m$ of pieces of beam weight information corresponding to the second network devices may be different. For details, refer to Table 3.

Table 3

| Time-frequency resources of N reference signals | Beam weights of M second network devices | | | | |
|---|---|---|---|---|---|
| | | Second network device 1 | Second network device 2 | Second network device 3 | ... | Second network device M |
| | (Time domain 1, frequency domain 1) | Beam weight 11 | Beam weight 12 | Beam weight 13 | ... | Beam weight 1M |
| | (Time domain 2, frequency domain 2) | Beam weight 21 | / | Beam weight 23 | ... | Beam weight 2M |
| | (Time domain 3, frequency domain 3) | Beam weight 31 | Beam weight 32 | / | ... | Beam weight 3M |
| | ... | ... | | | | |
| | (Time domain N, frequency domain N) | Beam weight N1 | / | Beam weight N3 | ... | / |

As shown in Table 3, on some time-frequency resources of the N reference signals, the first network device indicates corresponding beam weights for only some second network devices. For example, beam weight information of the second network device 2 is not indicated in (time domain 2, frequency domain 2); beam weight information of the second network device 3 is not indicated in (time domain 3, frequency domain 3); and beam weight information of the second network device 2 and the second network device M is not indicated in (time domain N, frequency domain N). In this case, a quantity $n_1$ of beam weights corresponding to the second network device 1 is N, a quantity $n_2$ of pieces of beam weight information corresponding to the second network device 2 is N-2, and a quantity $n_M$ of pieces of beam weight information corresponding to the second network device M is N-1.

Assuming that the second network device does not receive beam weight information related indication on a time-frequency resource, for example, the second network device 2 does not receive weight information related indication in (time domain 2, frequency domain 2), when receiving a reference signal, the second network device 2 may use a beam weight corresponding to a previous reference signal, that is, a beam weight 21, or may use a default beam weight. For example, for the second network device 2, it is preset that when no beam weight information is received, a default beam weight 0 is used to reflect a received reference signal.

Table 3 merely describes an association relationship between a time-frequency resource and incompletely indicated beam weight information (N pieces of beam weight information is not indicated for each of the M second network devices). An association relationship that is similar to the association relationship may exist between a time-frequency resource number and the incompletely indicated beam weight information, or between a time-frequency resource number and an incompletely indicated beam weight information number. Details are not described herein again.

Both M and N are integers. In addition, because the M second network devices in this embodiment of this application are a plurality of second network devices, M is greater than 1. In addition, to enable each of the M second network devices to obtain at least one piece of beam weight information dedicated to the second network device, N is greater than or equal to M, that is, $1 < M \leq N$.

For example, a difference between any two time domain resources in the time-frequency resources of the N reference signals is less than a first time interval, and the first time interval is determined based on coherence time of the first network device.

In this embodiment of this application, because the M second network devices are configured to cooperatively transmit a signal sent by the first network device or the terminal device, and the reference signals sent on the time-frequency resources of the N reference signals are used for calculating a phase difference that may be caused by each second network device in a signal transmission process, to reduce a difference between the calculated phase difference and an actual phase difference, a maximum difference between sending times of the N reference signals is to be less than the coherence time, so that segmented channels between every two of a base station, the second network device, and the terminal device on the time-frequency resources of the N reference signals are considered as a same channel, thereby avoiding interference.

Channel coherence time between the first network device and the terminal device is a maximum time difference in which a channel keeps constant. For signals sent by the first network device to the terminal device in the coherence time, it may be considered that attenuation degrees of the signals sent in the coherence time are similar. Mathematically, the coherence time may be represented as a reciprocal of Doppler spread, and is associated with a relative moving speed between and relative moving directions of the first network device and the terminal device.

In other words, in the N reference signals, a difference between a $1^{st}$ reference signal and an $N^{th}$ reference signal in time domain is to be at least less than the coherence time. A difference between any two time-frequency domain resources in the time-frequency resources of the N reference signals is less than the first time interval, and the first time interval is determined based on the coherence time. The first time interval is, for example, r*T, where r represents a multiple, T represents the coherence time, and $r \in (0, 1]$.

Further, each reference signal is a set of resource blocks on a plurality of time-frequency resources. The difference (mainly a difference in time domain) between any two time-frequency resources may include any one of the following cases:
A time interval difference between $i^{th}$ symbols (symbols) of two reference signals is less than the first time interval.

Alternatively, a time interval between an $i^{th}$ symbol of a previous reference signal and a $j^{th}$ symbol of a next reference signal is less than the first time interval.

Alternatively, a time interval between a time domain start position of an $i^{th}$ slot (slot) occupied by a previous reference signal resource block and a time domain start position of a $j^{th}$ slot occupied by a next reference signal resource block is less than the first time interval (where i and j may be different).

The beam weight information in this embodiment of this application indicates an angle at which the second network device reflects a signal. Specifically, the second network device is indicated to perform phase adjustment on the second network device based on content indicated by the beam weight information (that is, generate a beam weight indicated by the beam weight information), so that the second network device reflects a signal at a specific angle.

For example, this embodiment of this application may further include a process of obtaining beam weight information of the second network device. Specifically, the following steps (not shown in the figure) may be included before step 201:

2001: The first network device sequentially sends a plurality of downlink reference signals to the terminal device.
2002: A target second network device generates different beam weights on a time-frequency resource of each of the plurality of downlink reference signals, and reflects the downlink reference signal.
2003: The terminal device receives the plurality of downlink reference signals, and indicates, to the first network device, a reference signal with best signal quality in the plurality of downlink reference signals, or the terminal device feeds back each received downlink reference signal, and then the base station determines, based on the feedback, a specific beam corresponding to a signal with good quality.

2004: The first network device obtains a beam weight corresponding to the reference signal with best downlink reference signal quality, and determines the beam weight as a beam weight of the target second network device.

This process is a process of determining the beam weight information based on an angle at which the second network device reflects the signal with the best signal quality. If the beam weight information needs to be determined based on an angle at which the second network device reflects a signal with worst signal quality or does not reflect a signal, a similar step may be used, and details are not described herein again.

The beam weight in step 2002 may be a DFT beam weight indicated by the first network device, and a DFT beam is a beam reflected by setting a reflection weight of the second network device to the DFT weight. The DFT weight is as follows: $u = \left[ \exp \frac{j2\pi i \times 0}{N_H}, \exp \frac{j2\pi i \times 1}{N_H}, ..., \exp \frac{j2\pi i \times (N_H - 1)}{N_H} \right]$, where $i = (0, 1, ... , N_H - 1)$, and $v =$

$\left[ \exp \frac{j2\pi e \times 0}{N_V}, \exp \frac{j2\pi e \times 1}{N_V}, ..., \exp \frac{j2\pi e \times (N_V - 1)}{N_V} \right]$, where $e = (0, 1, ... , N_V - 1)$. $N_H$ and $N_V$ are quantities of horizontal and vertical array elements of an IRS panel respectively. The DFT weight $w = [u \otimes v, u \otimes v]$, and $\otimes$ is a Kronecker product operator.

202: The first network device sends second indication information to the terminal device, where the second indication information indicates the time-frequency resources of the N reference signals.

In this embodiment of this application, the first network device further needs to indicate the time-frequency resources of the N reference signals to the terminal device, so that the terminal device receives a reference signal on a corresponding time-frequency resource. In this way, the terminal device can learn of using the reference signals received on the indicated time-frequency resources to perform a subsequent phase information calculation process.

203: Each of the M second network devices receives the first indication information, and generates the $n_m$ beam weights based on the first indication information.

When sending the first indication information to the M second network devices, the first network device may send, to all the second network devices, the same first indication information, including the time-frequency resources of the N reference signals, the $n_m$ pieces of beam weight information corresponding to each of all the M second network devices, and the association relationship between the time-frequency resources of all the reference signals and all the pieces of beam weight information. Each second network device obtains, through parsing, beam weight information and an association relationship between a time-frequency resource and the beam weight information that are related to the second network device. Alternatively, the first network device may send different first indication information to the M second network devices. The first indication information received by each second network device includes only beam weight information and an association relationship between a time-frequency resource and the beam weight information that are related to the second network device.

After the second network device obtains the beam weight information and the association relationship between the time-frequency resource and the beam weight information that are related to the second network device, the second network device may generate, on a corresponding time-frequency resource, a beam weight associated with the time-frequency resource. For example, if an association relationship corresponding to the second network device 1 is {time-frequency resource 1, beam weight information 11}, the second network device 1 needs to generate the beam weight 11 on the time-frequency resource 1.

Similarly, if the first indication information received by the second network device does not include beam weight information corresponding to the second network device on a specific time-frequency resource, the second network device may keep a beam weight at a previous time-frequency resource position unchanged, or change the beam weight to a default (preset) beam weight. Specifically, the beam weight depends on predetermination by the second network device and the first network device.

204: The first network device sends N first downlink reference signals on the time-frequency resources of the N reference signals.

The first network device sends the N first downlink reference signals based on the predetermined time-frequency resources of the N reference signals. For example, a first downlink reference signal 1 is sent on a time-frequency resource 1. The first downlink reference signal is received and reflected by the second network device before being sent by the first network device to the terminal device. The second network device adjusts a beam weight of the second network device based on the first indication information, so that the first downlink reference signal is reflected to the terminal device at a preset angle. In this case, parameters related to a transmission process of the first downlink reference signal 1 include the first downlink reference signal 1, the time-frequency resource 1, and a beam weight 11.

The first downlink reference signal may be a channel state information-reference signal (channel state information-reference signal, CSI-RS), or may be a phase-tracking reference signal (phase-tracking reference signal, PT-RS), a time-frequency tracking reference signal (time-frequency tracking reference signal, TRS), a synchronized information block (synchronized information block, SSB), or the like.

When the first network device delivers the first downlink reference signal on the time-frequency resources of the N reference signals, the second network device synchronously generates a corresponding beam weight on the time-frequency resource. Therefore, step 203 and step 204 are performed in any sequence, depending on time indicated by the time-frequency resource.

205: The terminal device receives the N first downlink reference signals, and determines phase information based on the N first downlink reference signals.

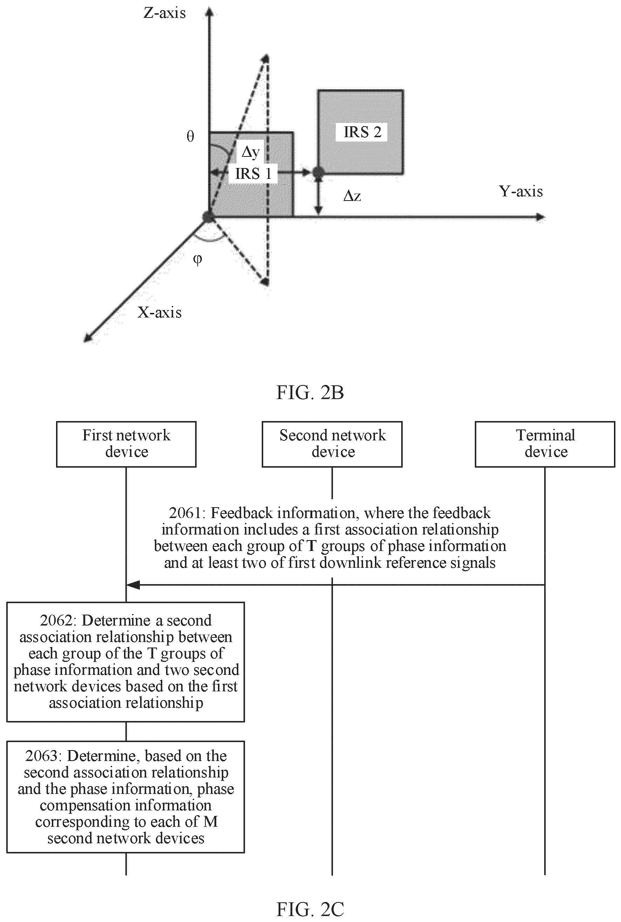

The N first downlink reference signals received by the terminal device are signals obtained through reflection by (all or some of) the M second network devices. An example in which the M second network devices are two IRSs is used to describe a calculation process. FIG. 2B is a diagram of cooperative transmission between two IRSs according to an embodiment of this application. As shown in FIG. 2B, it is assumed that an IRS 1 and an IRS 2 are deployed on a YOZ plane, an array element in a lower left corner of the IRS 1 is defined as a first array element, and corresponds to an origin (0, 0, 0) location. An emergent angle and an incident angle are respectively $(\varphi_p, \theta_p)$ and $(\varphi_l, \theta_l)$. The IRS 1 and the IRS 2 respectively include $N_H$ horizontal array elements and $N_V$ vertical array elements. In this case, an equivalent reflection channel of first network device-IRS-terminal device on a first panel may be represented as:

$$h_{cascade}(f) = \boldsymbol{\theta}^T \left( \sum_{p,l} \bar{g}_{p,l} \left( \bar{\mathbf{a}}_{p,l}^{IRS} \right) e^{-j2\pi\tau_{p,l}f} \right) (1)$$

$$\tau_{p,l} = \tau_p^{UE} + \tau_l^{BS}, \quad \bar{g}_{p,l} = g_p^{UE} g_l^{BS}, \quad \bar{\mathbf{a}}_{p,l,n,m}^{IRS} = exp\left( -j\frac{2\pi}{\lambda} \left[ ndy\alpha_{p,l} + mdz\beta_{p,l} \right] \right). \quad n$$

represents an $n^{th}$ array element in a horizontal direction of the panel, m represents an $m^{th}$ array element in a vertical direction of the panel, where $1 \le n \le N_H$ and $1 \le m \le N_V$. $\boldsymbol{\theta} \in C^{N_H N_V \times 1}$ and $\bar{\mathbf{a}}_{p,l}^{IRS} \in C^{1 \times N_H N_V}$, where $\boldsymbol{\theta}$ and $\bar{\mathbf{a}}_{p,l}^{IRS}$ are respectively a reflection weight vector and a steering vector of the IRS 1. $\alpha_{p,l}$ is denoted as $\alpha_{p,l} = sin\,\theta_l\,sin\,\varphi_l + sin\,\theta_p\,sin\,\varphi_p$, and $\beta_{p,l}$ is denoted as $\beta_{p,l} = cos\,\theta_p + cos\,\theta_l$, where p and 1 respectively represent a $p^{th}$ path between the second network device and UE and a $l^{th}$ path between a BS and the second network device.

The IRS 1 and the IRS 2 respectively include the $N_H$ horizontal array elements and the $N_V$ vertical array elements. A spacing between the first array element of the IRS 1 and a first array element of the IRS 2 in the YOZ plane is $(\Delta y, \Delta z)$. It is assumed that the spacing between the IRS 1 and the IRS 2 is not large, and a non-stationary phenomenon is not caused (in other words, delays, incident angles, emergent angles, and gains corresponding to the two IRS panels are the same). An equivalent reflection channel during cooperative transmission between the IRS 1 and the IRS 2 may be represented as:

$$h_{cascade}(f) = \sum_{p,l} \left( \bar{g}_{p,l} e^{-j2\pi\tau_{p,l}f} \sum_n \sum_m e^{j\left( \varphi_{n,m}^1 - \frac{2\pi}{\lambda}\left[ ndy\alpha_{p,l} + mdz\beta_{p,l} \right] \right)} \right.$$

$$\left. + \bar{g}_{p,l} e^{-j2\pi\tau_{p,l}f} \sum_n \sum_m e^{j\left( \varphi_{n,m}^2 - \frac{2\pi}{\lambda}\left[ (ndy+\Delta y)\alpha_{p,l} + (mdz+\Delta z)\beta_{p,l} \right] \right)} \right) (2)$$

It is assumed that $\alpha_{p,l}^{opt}$ and $\beta_{\,p,l}^{\,opt}$ represent angles corresponding to incident and emergent paths with maximum gains. Therefore, when $\varphi_{n,m}^1 = \frac{2\pi}{\lambda_c} \left[ ndy\alpha_{p,l}^{opt} + mdz\beta_{\,p,l}^{\,opt} \right]$ and

$\varphi_{n,m}^2 = \varphi_{n,m}^1 + \frac{2\pi}{\lambda_c} \left[ \Delta y\alpha_{p,l}^{opt} + \Delta z\beta_{\,p,l}^{\,opt} \right]$ , coherent transmission (cooperative transmission) between the IRS 1 and the IRS 2 can be implemented, so that energy of signals received by a terminal user is maximum. $\lambda_c$ represents a wavelength corresponding to a center carrier. Therefore, accurate $\Delta y$ and $\Delta z$ need to be obtained, to ensure that a corresponding compensation phase can be calculated in any emergent direction, to implement signal coherence between a plurality of IRSs.

When a compensation phase $\Delta\varphi = \varphi_{n,m}^2 - \varphi_{n,m}^1 = \frac{2\pi}{\lambda_c} \left[ \Delta y\alpha_{p,l}^{opt} + \Delta z\beta_{\,p,l}^{\,opt} \right] + 2k\pi$ , $k \in N$ (phase ambiguity phenomenon), coherence can be implemented between two IRSs. However, because accurate $\frac{2\pi}{\lambda_c} \left[ \Delta y\alpha_{p,l}^{opt} + \Delta z\beta_{\,p,l}^{\,opt} \right]$ cannot be obtained through searching for a phase, and because the phase ambiguity

phenomenon exists, $\Delta y$ and $\Delta z$ cannot be deduced reversely by using a phase difference. Therefore, in this solution, a phase tilt (beam squint) phenomenon in a broadband is used (to be specific, in a broadband, because signals of different subbands have different carriers and different wavelengths, a direction of a beam deviates from a direction of a center carrier), and a slope of a compensation phase at each frequency that changes with the frequency is deduced by using a degree of freedom of a frequency, to obtain accurate $\Delta y\alpha_{p,l}^{opt} + \Delta z\beta_{p,l}^{opt}$.

Based on the foregoing descriptions, a specific process of determining the phase information (which is also described by using an example in which the M second network devices are two IRSs) may include the following operations.

(1) The first network device obtains a reflection angle of the IRS 1. For ease of description, $\alpha_{p,l}^{opt}$ and $\beta_{p,l}^{opt}$ are denoted as $\alpha$ and $\beta$. Meanings of $\alpha$ and $\beta$ are the same as those described in step 201. A beam weight of the IRS 1 is determined as $\Phi_1$ based on $\alpha$ and $\beta$ of the IRS 1. $\Phi_1 = \begin{bmatrix} \varphi_{1,1} & \cdots & \varphi_{1,N_V} \\ \vdots & \ddots & \vdots \\ \varphi_{N_H,1} & \cdots & \varphi_{N_H,N_V} \end{bmatrix}$, and $\Phi_1$ is a matrix form of the foregoing θ, and represents phase distribution of array elements of the second network device. A phase of each array element may be expressed as $\varphi_{n,m} = \frac{2\pi}{\lambda_c}[ndy\alpha + mdz\beta]$.

$\lambda_c$ represents the wavelength corresponding to the center carrier, $n$ represents the $n^{th}$ array element in the horizontal direction of the panel, $m$ represents the $m^{th}$ array element in the vertical direction of the panel, $\Phi_1 \in C^{N_H \times N_V}$, $dy$ represents a spacing between two adjacent array elements in the horizontal direction, and $dz$ represents a spacing between two adjacent array elements in the vertical direction.

(2) The first network device may send beam weight information of the two IRSs on time-frequency resources (N=2) of two reference signals (the time-frequency resource of the reference signal is referred to as a time-frequency resource for short below). The beam weight that is of the IRS 1 and that is indicated on the time-frequency resource 1 for the first time is $\Phi_1$, and the beam weight of the IRS 2 is indicated on the time-frequency resource of the reference signal in an idle mode. The idle mode of the beam weight information of the second network device includes the following cases:

When the second network device sets the beam weight to an idle mode, a beam gain corresponding to the beam weight of the idle mode is less than or equal to a preset gain threshold.

Alternatively, when the second network device sets the beam weight to an idle mode, a beam gain corresponding to the beam weight of the idle mode is greater than a preset gain threshold, but a beam gain in a direction in which the terminal device is located is less than a preset gain threshold.

The preset gain threshold that the beam gain is less than may be an excessively small value close to 0. In this case, that the beam weight information of the IRS 2 is indicated in the idle mode may be equivalent to that a signal received by the terminal device is not affected by the IRS 2. In this case, the reference signal received by the terminal device on the time-frequency resource 1 is reflected only by the IRS 1. It is assumed that the M second network devices are two or more devices, beam weight information of another second network device may also be indicated in an idle mode, to eliminate interference from the another second network device during determining phase information of the two second network devices.

The beam weights that are of the IRS 1 and the IRS 2 and that are indicated by the first network device on the time-frequency resource 2 for the second time are both $\Phi_1$.

(3) The first network device equally divides a reference signal into K subbands (that is, the frequency unit in the claim) on a full band for sending. Each subband includes $B_f$ REs, and a bandwidth of each subband is small. It is approximately considered that $\Delta\varphi = \frac{2\pi}{\lambda_k}[\Delta y\alpha + \Delta z\beta]$ does not change with a frequency (where $\lambda_k = \frac{c}{f_k}$, c is the speed of light, $f_k$ is a carrier, and $\lambda_k$ represents a wavelength of a corresponding frequency in the subband).

In this case, a signal received by the terminal device on a $b^{th}$ RE on a $k^{th}$ subband may be represented as:

$$y(f_b) = h(f_b) + n(f_b)$$

$$= \bar{g}_{p,l}e^{-j2\pi\tau f_b}N_H N_V\left(1 + e^{j\left(-\frac{2\pi}{\lambda_k}[\Delta y\alpha + \Delta z\beta]\right)}\right) + n(f)\,(3)$$

$k \in [1, K]$, $y(f_b)$ represents the signal received on the $b^{th}$ RE on the subband, $h(f_b)$ represents a $b^{th}$ RE channel on the subband, and $n(f_b)$ represents subband additive noise. Formula (3) is written in the following matrix form:

$$\begin{bmatrix} y(f_1) \\ y(f_2) \\ \dots \\ y\left(f_{B_f}\right) \end{bmatrix} = \left(1 + e^{j\left(-\frac{2\pi}{\lambda_k}[\Delta y\alpha + \Delta z\beta]\right)}\right) \underbrace{\begin{bmatrix} \bar{g}_{p,l}e^{-j2\pi\tau f_1}N_H N_V \\ \bar{g}_{p,l}e^{-j2\pi\tau f_2}N_H N_V \\ \dots \\ \bar{g}_{p,l}e^{-j2\pi\tau f_{B_f}}N_H N_V \end{bmatrix}}_{\mathbf{r}} + \underbrace{\begin{bmatrix} n(f_1) \\ n(f_2) \\ \dots \\ n\left(f_{B_f}\right) \end{bmatrix}}_{\mathbf{n}} \to \mathbf{y}$$

$$= \left(1 + e^{j\left(-\frac{2\pi}{\lambda_k}[\Delta y\alpha + \Delta z\beta]\right)}\right)\mathbf{r} + \mathbf{n} \quad (4)$$

$\mathbf{y} \in C^{B_f \times 1}$, $\mathbf{r} \in C^{B_f \times 1}$, and $\mathbf{n} \in C^{B_f \times 1}$. $\mathbf{r}$ may be obtained by terminal device receiving the downlink reference signal sent by the first network device when setting the beam weight information of the IRS 2 to the idle mode, and $\mathbf{y}$ may be obtained by receiving the downlink reference signal sent by the first network device when the beam weight information of the IRS 1 and the IRS 2 is set to $\Phi_1$. Through maximum likelihood estimation, the following formula is obtained:

$$a_k^t = \angle\{\mathbf{r}^H(\mathbf{y} - \mathbf{r})\} \quad (5)$$

$a_1^t, \dots, a_K^t$ may be finally obtained by repeating the foregoing process on the subbands (different k).

(4) $a_1^t, \dots, a_K^t$ are a group of ambiguous phases, and are used for obtaining a $t^{th}$ group of T groups of phase information. However, because two consecutive $a_k^t$ are measured on adjacent subbands, $a_k^t$ and $a_{k+1}^t$ vary gradually, with no jumps exceeding $\pi$. Reasons are as follows:

$$\frac{2\pi}{\lambda_k}(\Delta y\alpha + \Delta z\beta) - \frac{2\pi}{\lambda_{k+Bf}}(\Delta y\alpha + \Delta z\beta) = 2\pi(\Delta y\alpha + \Delta z\beta)\left(\frac{f_k - f_{k+B_f}}{c}\right) \quad (6)$$

c indicates the speed of light. Assuming that the subband bandwidth is 20 MHz, $\left(\frac{f_k - f_{k+B_f}}{c}\right) = \frac{1}{15}$, and assuming that a maximum spacing between $\Delta y$ and $\Delta z$ is 1 m, then $(\Delta y\alpha + \Delta z\beta)\left(\frac{f_k - f_{k+B_f}}{c}\right) \leq \frac{4}{15}$.

Because phase jumps exceeding $\pi$ do not occur on $a_1^t, \dots, a_K^t$, the $t^{th}$ group of the T groups of phase information may be obtained by using a phase unwrapping solution. The $t^{th}$ group of phase information includes $K$ consecutive phase values $a_1^{*t}, \dots, a_K^{*t}$, and an unwrapping strategy is as follows:

$$a_{i+1}^{*t} - a_i^{*t} =$$

$$\begin{cases} a_{i+1} - a_i, & |a_{i+1} - a_i| \leq \pi \\ a_{i+1} - a_i - 2\pi, & a_{i+1} - a_i > \pi \\ a_{i+1} - a_i + 2\pi, & a_{i+1} - a_i < -\pi \end{cases} \quad (7)$$

The above is a process of calculating phase information when two IRSs includes beam weight information that corresponds to one of the two IRSs and that is indicated in an idle mode. In some other cases, neither of the two IRSs may include the weight information indicated in an idle mode. Therefore, for example, before the first network device sends the N first downlink reference signals on the time-frequency resources of the N reference signals, the method further includes: The first network device sends fourth indication information to the terminal device, where the fourth indication information indicates second weight initial phase information corresponding to the time-frequency resources of the N downlink reference signals. That the phase information is determined by the terminal device based on the N first downlink reference signals includes: The phase information is determined by the terminal device based on the N first downlink reference signals and the second weight initial phase information. The beam weight information indicated by the first network device to the second network device further includes weight initial phase information.

The weight initial phase information indicated by the first network device to the second network device may be different from the second weight initial phase information indicated to the terminal device. For example, each of the M second network devices is indicated with weight initial phase information corresponding to the second network device, and the terminal device is indicated with all weight initial phase information associated with a specific time-frequency resource position. Certainly, the weight initial phase information indicated by the first network device to the second network device may alternatively be the same as the second weight initial phase information indicated to the terminal device. In addition, manners for indicating the second weight initial phase information to the second network device and the terminal device may be different. Specifically, the first network device may indicate the beam weight information in at least one of the following manners:

sending beam weight index information and index information of the weight initial phase information;
sending beam weight quantization information and index information of the weight initial phase information;
sending beam weight index information and quantization information of the weight initial phase information;
sending beam weight quantization information and quantization information of the weight initial phase information;
sending beam weight index information;
sending beam weight quantization information;
sending quantization information of the weight initial phase information; or
sending index information of the weight initial phase information.

In other words, the beam weight and/or the weight initial phase information included in the sent beam weight information may be separately sent in an index form or sent in a quantization information form.

For example, when the beam weight index information indicates the beam weight, it is assumed that the second network device has learned that a beam weight index=$N_H * i + e$, where meanings of $N_H$, $i$ and $e$ are the same as those in a DFT weight. It is assumed that $N_H$=5, and the beam weight index information indicated in the first indication information sent by the first network device is 15. In this case, the second network device may determine that $i$=3, and, $e$=0, and further, the second network device may determine the DFT weight.

When the index information of the weight initial phase information indicates the weight initial phase information, it is assumed that the second network device has learned that a correspondence between an index of a weight initial phase and the weight initial phase is {1:90°; 2:180°; ...}, and the index information of the weight initial phase information indicated in the first indication information sent by the second network device is 1, the second network device may determine that the weight initial phase is 90°.

In some cases, for example, as described in step 201, the first network device does not indicate the beam weight information of the second network device on some time-frequency resources. In this case, the first network device may separately indicate the weight initial phase information corresponding to the second network device. The weight initial phase information may be specifically indicated by using the quantization information of the weight initial phase information or the index information of the weight initial phase information.

The first network device may indicate the beam weight information and/or the weight initial phase information to the terminal device or the second network device in any one of the foregoing manners, and the beam weight information and the weight initial phase information may be the same or may be different.

In this embodiment of this application, the beam weight index information indicates the beam weight information, or the index information of the weight initial phase information indicates the weight initial phase information, so that extremely few resource overheads may be used for indicating information with more content, thereby reducing transmission resource consumption. The beam weight quantization information indicates the beam weight information, or the quantization information of the weight initial phase information indicates the weight initial phase information, so that accuracy of indicated content can be improved. Moreover, in a manner of combining the beam weight index information and the quantization information of the weight initial phase information, or in a manner of combining the beam weight quantization information and the index information of the weight initial phase information, transmission resource consumption can be partially reduced, and in addition, accuracy of indicated content can be partially improved, so that a better balance is achieved between the transmission resource consumption reducing and the indicated content accuracy improving. Adaptive selection can be made as needed.

For a case in which the first network device indicates the weight initial phase information, the following describes a phase information calculation process.

It is assumed that the first network device indicates that beam weights of an IRS 1 and an IRS 2 are respectively $\Phi_0$ and $\Phi_1$. Because no beam weight is indicated in an idle mode, both the two beam weights affect the first downlink reference signal received by the terminal device. In this case, the beam weights may be multiplied by different coefficients, in other words, the first network device indicates different weight initial phases. Details are as follows.

In a feasible manner, it may be indicated on the time-frequency resource 1 that the IRS 1 and the IRS 2 have a same weight initial phase $e^{j\varphi 0}$, then a beam weight of the IRS 1 is adjusted to $\Phi 0 e^{j\varphi 0}$, a beam weight of the IRS 2 is adjusted to $\Phi 1 e^{j\varphi 0}$, $\mathbf{H}_d \in C^{N_R \times N_T}$ is a direct transmission channel of a specific frequency unit, and $\mathbf{w} \in C^{N_T \times N_L}$ is a precoding matrix, where $\mathbf{H}_{r,0} \in C^{N_R \times NI}$, $\Phi_0 \in C^{NI \times NI}$, and $\mathbf{G}_0 \in C^{NI \times N_T}$. $N_R$ and $N_T$ respectively represent a quantity of transmit antennas of the first network device and a quantity of receive antennas of the terminal device, $N_L$ represents a quantity of transport

streams, and $N_l$ represents a total quantity of array elements of the IRS 1. This is the same for the IRS 2. In this example, $\Phi_1$ is a diagonal matrix, and is different from that in the previous example. Estimated channels of the IRS 1 and the IRS 2 may be expressed as:

$$\mathbf{y_1} = \mathbf{H_d}\mathbf{w}e^{j\varphi_0} + \mathbf{H}_{r,0}\mathbf{\Phi_0}\mathbf{G_0}\mathbf{w}e^{j\varphi_0} + \mathbf{H}_{r,1}\mathbf{\Phi_1}\mathbf{G_1}\mathbf{w}e^{j\varphi_0}$$

When a weight initial phase of the IRS 1 is indicated as $e^{j\varphi1}$ on the time-frequency resource 2, and a weight initial phase of the IRS 2 is indicated as $e^{j\varphi2}$, a beam weight of the IRS 1 is adjusted to $\Phi0e^{j\varphi1}$, and a beam weight of the IRS 2 is adjusted to $\Phi1e^{j\varphi2}$. Estimated channels of the IRS 1 and the IRS 2 may be represented as:

$$\mathbf{y_2} = \mathbf{H_d}\mathbf{w}e^{j\varphi_0} + \mathbf{H}_{r,0}\mathbf{\Phi_0}\mathbf{G_0}\mathbf{w}e^{j\varphi_1} + \mathbf{H}_{r,1}\mathbf{\Phi_1}\mathbf{G_1}e^{j\varphi_2}$$

When a weight initial phase of the IRS 1 is indicated as $e^{j\varphi0}$ on the time-frequency resource 3, and a weight initial phase of the IRS 2 is indicated as $e^{j\varphi2}$, a beam weight of the IRS 1 is adjusted to $\Phi0e^{j\varphi0}$, and a beam weight of the IRS 2 is adjusted to $\Phi1e^{j\varphi2}$. Estimated channels of the IRS 1 and the IRS 2 may be represented as:

$$\mathbf{y_3} = \mathbf{H_d}\mathbf{w}e^{j\varphi_0} + \mathbf{H}_{r,0}\mathbf{\Phi_0}\mathbf{G_0}\mathbf{w}e^{j\varphi_0} + \mathbf{H}_{r,1}\mathbf{\Phi_1}\mathbf{G_1}e^{j\varphi_2}$$

A matrix is written in the following form.

$$\underbrace{\begin{bmatrix}\mathbf{y_1}\\\mathbf{y_2}\\\mathbf{y_3}\end{bmatrix}}_{y} = \underbrace{\begin{bmatrix}e^{j\varphi_0} & e^{j\varphi_0} & e^{j\varphi_0}\\e^{j\varphi_0} & e^{j\varphi_1} & e^{j\varphi_2}\\e^{j\varphi_0} & e^{j\varphi_0} & e^{j\varphi_2}\end{bmatrix}}_{A} \underbrace{\begin{bmatrix}\mathbf{H_d}\mathbf{w}\\\mathbf{H}_{r,0}\mathbf{\Phi_0}\mathbf{G_0}\mathbf{w}\\\mathbf{H}_{r,1}\mathbf{\Phi_1}\mathbf{G_1}\mathbf{w}\end{bmatrix}}_{x} + \underbrace{\begin{bmatrix}\mathbf{n_1}\\\mathbf{n_2}\\\mathbf{n_3}\end{bmatrix}}_{n} \Rightarrow \mathbf{x} = (\mathbf{A}^H\mathbf{A})^{-1}\mathbf{A}^H\mathbf{y} \Rightarrow a_k^{*\,t} =$$

$$\angle(\mathbf{x_3}/\mathbf{x_2})$$

$\mathbf{y}$ represents signals received by the terminal device on the three time-frequency resources, $\mathbf{A}$ represents a weight initial phase matrix, $\mathbf{x}$ represents a downlink channel matrix, $\mathbf{n}$ represents an additive noise matrix of a receive end, and $a_k^*$ represents phase information estimated on a $k^{th}$ frequency unit. $a_1^{*\,t}, \dots, a_K^{*\,t}$ may be obtained by repeating the foregoing algorithm on K frequency units. $a_1^{*\,t}, \dots, a_K^{*\,t}$ is a $t^{th}$ group of phase information obtained by the terminal device.

It should be noted that the foregoing weight initial phase and the weight initial phase matrix A are examples of a feasible manner, and other feasible manners are not described in detail.

It can be learned that in this embodiment of this application, the first network device indicates the weight initial phase information corresponding to the second network device, so that when the terminal device obtains, through calculation based on the received first downlink reference signal, phase information between signals reflected to the terminal device by using different second network devices, the terminal device performs calculation with reference to the weight initial phase information corresponding to the second network device. This can ensure feasibility of a phase information calculation process when first downlink signals reflected by a plurality of second network devices affect each other, and improve efficiency of obtaining the phase information.

It should be noted that the foregoing process of obtaining the phase information through calculation is only an optional example, and the phase information may alternatively be obtained through calculation by using another feasible method. The foregoing implementation process should not constitute a limitation on embodiments of this application.

206: The terminal device sends the phase information to the first network device.

After obtaining the phase information through calculation, the terminal device sends the phase information to the first network device. It is assumed that there are T groups of phase information sent by the terminal device, and each group of phase information may be, for example, consecutive phases $a_1^{*\,t}, \dots, a_K^{*\,t}$ or ambiguous phases $a_1^t, \dots, a_K^t$.

207: The first network device receives the phase information, and sends phase compensation information to the M second network devices based on the phase information.

After obtaining the phase information through calculation, the terminal device sends the phase information to the first network device. Because the phase information obtained by the terminal device through calculation is phase information between signals reflected by two second network devices to the terminal device, the first network device may further determine, based on the phase information, phase compensation information corresponding to each second network device, and then send the phase compensation information to the second network device, so that the second network device determines phase compensation that the second network device is to perform.

For example, $a_1^{*\,t}, ..., a_K^{*\,t}$ are consecutive phases. It may be learned from the foregoing definition that, for the phase

$a_k^{*\,t} = \frac{2\pi}{\lambda_k}(\Delta y\alpha + \Delta z\beta) = \frac{2\pi f_k}{c} * (\Delta y\alpha + \Delta z\beta)$, $\frac{2\pi f_k}{c}$ is an independent variable, denoted as $x_k$, $a_k^{*\,t}$ is a dependent variable, $k \in [1, K]$, and $\Delta y\alpha + \Delta z\beta$ may represent a slope, denoted as $k_s$. The slope $k_s$ may be obtained through linear regression by using the following formula:

$$\widehat{k_s} = \frac{\sum(x_i - \bar{x})(a_i^* - \overline{a^*})}{\sum(x_i - \bar{x})^2} \quad (8)$$

For the terminal device, it may be obtained that $\widehat{k_s^1} = \Delta y\alpha_1 + \Delta z\beta_1$. $\widehat{k_s^1}$, $\alpha_1$, and $\beta_1$ are known quantities, and $\Delta y$ and $\Delta z$ are unknown quantities. Therefore, two equations are required to solve the unknown quantities.

In step (1) to step (3) in step 205, that on the time-frequency resource 1, the IRS 1 generates the beam weight $\Phi_1$ and the IRS 2 generates the beam weight indicated in an idle mode are described, and correspondingly, the terminal device simultaneously receives reflected signals of the two IRSs on the time-frequency resource 1. Downlink reference signals reflected by the IRS 1 and the IRS 2 are respectively A and B. The second network device indicates the IRS 1 and the IRS 2 to generate the beam weights $\Phi_1$ on the time-frequency resource 2. Correspondingly, downlink reference signals reflected by the IRS 1 and the IRS 2 received by the terminal device on the time-frequency resource 1 are A and A' respectively. In other words, the first downlink reference signals received by the terminal device are:

$$\begin{matrix} & IRS\ 1 & IRS\ 2 \\ \text{Time-frequency resource 1} & \begin{bmatrix} A & B \\ A & A' \end{bmatrix} \\ \text{Time-frequency resource 2} & \end{matrix}$$

In this case, because the downlink reference signal B is a signal received by using the beam weight indicated in the idle mode, the downlink reference signal B does not cause interference to the downlink reference signal A on the time-frequency resource 1. According to step (3), A+B corresponds to **r**, and A+A' corresponds to **y.** On the time-frequency resource 2, the first reference signal on the time-frequency resource 1 is subtracted from the first reference signals (A+A') received by the terminal device, and the remaining reference signal is the downlink reference signal A' reflected by the IRS 2 on the time-frequency resource 2. The first network device may obtain $\widehat{k_{s_{1,2}}^1}$ through calculation by using the foregoing steps, where $\widehat{k_{s_{1,2}}^1}$ represents a slope estimated based on phase information reported by the terminal device at a position 1. The foregoing steps are repeated. The first network device may obtain corresponding $\widehat{k_{s_{1,2}}^2}$ based on phase information reported by the terminal device at a position 2, that is, a position to which the terminal device moves. Equations of $\widehat{k_{s_{1,2}}^1}$ and $\widehat{k_{s_{1,2}}^2}$ are combined, so that $\Delta y$ and $\Delta z$ can be deduced reversely. After $\Delta y$ and $\Delta z$ are obtained, if $\alpha$ and $\beta$ corresponding to the terminal device at a specific position are known, because it is assumed that M=2 and the IRS 1 is a reference plane, phase compensation information of the IRS 2 may be represented as $\Delta\varphi = \frac{2\pi}{\lambda_c}[\Delta y\alpha + \Delta z\beta]$, thereby implementing coherent transmission between the IRS 1 and the IRS 2.

For example, the first network device obtains the phase information $a_1^{*\,t}, ..., a_K^{*\,t}$ reported by the terminal device, which are consecutive phases. Because it is assumed that M=2 and the IRS 1 is the reference plane, the phase compensation information of the IRS 2 may be represented as $\Delta\varphi = \frac{a_1^{*\,t}, ..., a_K^{*\,t}}{K}$, thereby implementing the coherent transmission between the IRS 1 and the IRS 2.

The foregoing calculation process is described by using two (M=2) IRSs as an example. For a case in which M>2, for example, M=3, a similar process may also be used to calculate the phase information. In this case, assuming that the first network device is a reference plane, the first network device may indicate beam weight information of an IRS 1, an IRS 2, and an IRS 3 on a time-frequency resource 1, a time-frequency resource 2, and a time-frequency resource 3. A signal received by the terminal device may be:

$$\begin{array}{cccc} & IRS\,1 & IRS\,2 & IRS\,3 \\ \text{Time-frequency resource 1} & \begin{bmatrix} A & B & B \\ \text{Time-frequency resource 2} & A & A' & B \\ \text{Time-frequency resource 3} & A & B & A^* \end{bmatrix} \end{array}$$

The first network device may separately combine received phase information for equation solving to obtain $\widehat{k^1_{s_{1,2}}}$ and $\widehat{k^1_{s_{1,3}}}$. $\widehat{k^1_{s_{1,2}}}$ is obtained by the first network device through calculation based on phase information estimated by the terminal device based on signals received at a position 1 and on the time-frequency resources 1 and 2. $\widehat{k^1_{s_{1,3}}}$ is obtained by the first network device through calculation based on phase information estimated by the terminal device based on signals received at the position 1 and on the time-frequency resources 1 and 3. For phase information reported by the terminal device at a position 2, the first network device may obtain $\widehat{k^2_{s_{1,2}}}$ and $\widehat{k^2_{s_{1,3}}}$ by repeating the foregoing operations.

$\Delta y_{1,2}$ and $\Delta z_{1,2}$ may be obtained through calculation by combining $\widehat{k^1_{s_{1,2}}}$ and $\widehat{k^2_{s_{1,2}}}$. $\Delta y_{1,2}$ and $\Delta z_{1,2}$ represent a horizontal panel distance and a vertical panel distance that are estimated based on reference signals sent on the time-frequency resources 1 and 2. Similarly, $\Delta y_{1,3}$ and $\Delta z_{1,3}$ may be obtained through calculation by combining $\widehat{k^1_{s_{1,3}}}$ and $\widehat{k^2_{s_{1,3}}}$ for equation solving. Based on the foregoing assumption, in this case, the phase compensation information of the IRS 2 may be represented as $\Delta\varphi_2 = \frac{2\pi}{\lambda_c}\left[\Delta y_{1,2}\alpha + \Delta z_{1,2}\beta\right]$, $\alpha$ and $\beta$ are determined based on a beam emergent angle at which the IRS 2 points to a specific terminal device and a beam emergent angle of the IRS 2. Similarly, phase compensation information of the IRS 3 may be represented as $\Delta\varphi_3 = \frac{2\pi}{\lambda_c}\left[\Delta y_{1,3}\alpha' + \Delta z_{1,3}\beta'\right]$.

The phase information reported by the terminal device at the position 1 and the phase information reported by the terminal device at the position 2 may alternatively be described as phase information reported by a terminal device 1 and phase information reported by a terminal device 2, Provided that phase information received by the first network device is phase information reported by the terminal device at different positions, and there is no specific restriction on whether the phase information is reported by a same terminal device.

In this embodiment of this application, the phase information may represent phase differences generated by reflecting the N first downlink reference signals by the M second network devices based on the $n_m$ pieces of beam weight information corresponding to each of the M second network devices. In this case, the phase compensation information is used for compensating for these phase differences, so that the M second network devices can perform cooperative transmission. In this case, the first network device may determine, based on the plurality of pieces of obtained phase information, phase compensation information of one second network device relative to any other second network device that is not directly related to the second network device.

For example, it is assumed that the IRS 1 uses an IRS 0 as a reference plane, the IRS 2 uses the IRS 1 as a reference plane, and phase compensation information of the IRS 1 is $\Delta\varphi_1$. A phase difference of signals received by the terminal device by using the IRS 1 and the IRS 2 is denoted as $\Delta\varphi_{2,1}$. Finally, when the IRS 0 is used as a reference plane, a compensation phase of the IRS 2 may be $\Delta\varphi_2 = \Delta\varphi_1 + \Delta\varphi_{2,1}$.

For example, sending the phase compensation information to the M second network devices includes: sending, to L second network devices in the M second network devices, phase compensation information corresponding to the L second network devices, where L is an integer not greater than M.

That is, when sending the phase compensation information to the M second network devices, the first network device may send only phase compensation information corresponding to the second network device to the second network device. For example, if the phase compensation information $\Delta\varphi$ indicates a phase that needs to be compensated for the IRS 2, the phase information is sent only to the IRS 2. This sending manner may be considered as a point-to-point sending manner. In this sending manner, consumption of sending a resource can be reduced, and resources and time consumed for receiving and obtaining the phase compensation information by the second network device can be reduced, thereby improving efficiency of sending the phase compensation information. L is an integer not greater than M, in other words, L may be equal to M. To be specific, each second network device can receive phase compensation information corresponding to the second network device, and a compensation phase indicated by the phase compensation information may be 0. Alternatively, L may be less than M. To be specific, only a part of second network devices can receive phase compensation information corresponding to the second network devices. The other parts, for example, second network devices that do not need phase compensation, do not receive phase compensation information.

Certainly, the first network device may alternatively package all phase compensation information related to the M second network devices (all or some of the devices) and send the packaged phase compensation information to the M second network devices. This sending manner may be considered as a broadcast sending manner. In this sending manner, a process of sending all phase compensation information can be completed by only packaging the phase compensation information all at once, so that signaling overheads of the first network device can be reduced.

It can be learned that, in this embodiment of this application, for a case in which a plurality of distributed second network devices reflect signals, the first network device sends the N first downlink reference signals to obtain a phase difference between different second network devices through measurement, so that accuracy of sending a signal at a specified time-frequency resource position can be ensured, and a measurement error can be reduced. Then, the phase compensation information is sent to the second network device, so that the second network device performs phase compensation, to avoid or reduce signal cancellation, thereby implementing cooperative transmission between the plurality of second network devices. In this way, signal transmission efficiency is improved while arrangement costs of the second network device are controlled.

For example, there are a total of T groups of phase information reported by the terminal device. FIG. 2C is a flowchart of obtaining phase information according to an embodiment of this application. The method further includes the following steps.

2061: The terminal device sends feedback information to the first network device, where the feedback information includes a first association relationship between each group of the T groups of phase information and at least two of the first downlink reference signals. Correspondingly, the first network device receives the feedback information.

2062: The first network device determines a second association relationship between each group of the T groups of phase information and two second network devices based on the first association relationship.

2063: The first network device determines, based on the second association relationship and the phase information, phase compensation information corresponding to each of the M second network devices, where T is a positive integer.

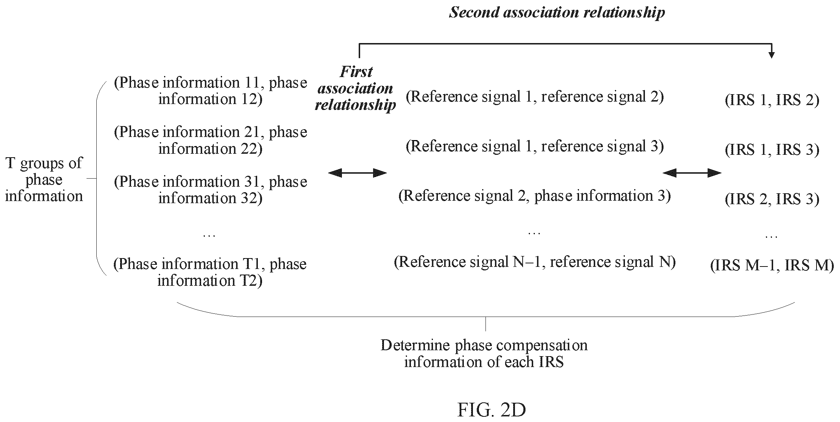

As described above, the phase information is phase information between signals reflected by the two second network devices to the terminal device. There may be T groups of phase information determined by the terminal device. Specifically, FIG. 2D is a diagram of an association relationship for phase information according to an embodiment of this application. As shown in FIG. 2D, because the terminal device performs processing and calculation based on the received N first downlink reference signals to obtain the phase information, the terminal device may determine the first association relationship between each group of the included T groups of phase information and at least two (where two first downlink reference signals are used as an example in FIG. 2D) of first downlink reference signals (where the first downlink reference signals are abbreviated as reference signals in FIG. 2D). The terminal device may send the first association relationship to the first network device by using the feedback information.

After the first network device receives the feedback information, the first network device can learn of a correspondence between the first downlink reference signal and the second network device, to be specific, the first network device can indirectly learn of which first downlink reference signals correspond to which second network devices. Therefore, the first network device may determine the second association relationship between each group of the T groups of phase information and the two second network devices based on the first association relationship (where an example in which the second network device is an IRS is used in FIG. 2D).

Further, the first network device may determine, based on the second association relationship, phase compensation information corresponding to each second network device. As described in step 207, the first network device may specify, based on the second association relationship, that the phase information obtained and reported by the terminal device based on reference signals received on the time-frequency resources 1 and 2 may be used for determining the phase compensation information of the IRS 2.

It can be learned that in this embodiment of this application, the terminal device sends the feedback information to the first network device, to describe the first association relationship between each group of the T groups of phase information and at least two of the first downlink reference signals, so that the first network device determines, based on the first association relationship and information included in the first network device, the phase compensation information corresponding to each second network device. This ensures efficiency and accuracy of determining the phase compensation information by the first network device.

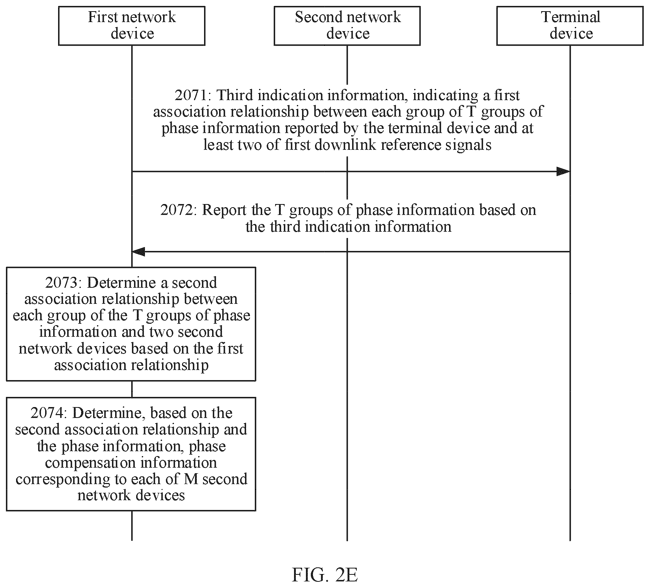

For example, as described above, there are a total of T groups of phase information reported by the terminal device. FIG. 2E is a flowchart of obtaining phase information according to an embodiment of this application. The method further includes the following steps.

2071: The first network device sends third indication information to the terminal device, where the third indication information indicates a first association relationship between each group of the T groups of phase information reported by the terminal device and at least two of the first downlink reference signals. Correspondingly, the terminal device receives the third indication information.

2072: The terminal device reports the T groups of phase information to the first network device based on the third indication information.

2073: The first network device determines a second association relationship between each group of the T groups of phase information and two second network devices based on the first association relationship.

2074: The first network device determines, based on the second association relationship and the phase information, phase compensation information corresponding to each of the M second network devices, where T is an integer greater than or equal to 1.

In this embodiment, the first network device may first send the third indication information to the terminal device, to indicate the first association relationship between each group of the T groups of phase information reported by the terminal device and at least two of the first downlink reference signals. For example, the third indication information sent by the first network device to the terminal device indicates that a 1st group of phase information has the first association relationship with (reference signal 1, reference signal 2). After receiving the third indication information, the terminal device reports the T groups of phase information to the first network device based on the third indication information. For example, the 1st group of phase information in the T groups of phase information is phase information obtained by the terminal device through calculation based on (reference signal 1, reference signal 2).

After receiving the T groups of phase information, the first network device may further determine the second association relationship between each group of phase information and the two second network devices based on the first association relationship between each group of phase information and at least two of the first downlink reference signals, and then determine the phase compensation information corresponding to the second network device. A specific process is shown in the related descriptions of the method embodiment in FIG. 2C, and details are not described herein again.

It can be learned that in this embodiment of this application, the first network device sends the third indication information to the terminal device, to indicate the first association relationship between each group of the T groups of phase information and at least two of the first downlink reference signals, so that the terminal device reports the phase information based on the preset first association relationship. This can improve efficiency of the first network device in learning of the first association relationship, determining the second association relationship based on the first association relationship, and determining the phase compensation information corresponding to each second network device, and further ensures efficiency and accuracy of determining the phase compensation information by the first network device.

For example, after the first network device sends the N first downlink reference signals on the time-frequency resources of the N reference signals, the method further includes: The first network device sends frequency indication information to the terminal device, where the frequency indication information indicates an association relationship between each phase in each group of the T groups of phase information and a frequency unit of the first downlink reference signal.

As described in the foregoing embodiment, the first network device may divide the first downlink reference signal into K subbands for sending. In this case, each group of the T groups of phase information determined by the terminal device may be, for example, $a_1^t, \ldots a_k^t \ldots, a_K^t$ (where there is phase ambiguity). The group of phase information includes K pieces of phase information, and each piece of phase information has an association relationship with the frequency unit of the first downlink reference signal. For example, $a_k^t$ has an association relationship with a kth frequency unit. After sending the frequency indication information to the terminal device, the first network device may perform phase unwrapping with reference to the received phase information reported by the terminal device, to obtain K consecutive phase values $a_1^{*t}, \ldots, a_K^{*t}$, and then further obtain $\Delta y$ and $\Delta z$ through calculation, to finally obtain the phase compensation information of the second network device through calculation; or the first network device directly generates the phase compensation information of the second network based on $a_1^{*t}, \ldots, a_K^{*t}$.

It can be learned that in this embodiment of this application, the terminal device sends, based on an association relationship that is between ambiguous phase information and the frequency unit and that is indicated by the first network device, the ambiguous phase information obtained through calculation to the first network device, and the first network device performs more subsequent processing processes to finally determine the phase compensation information of the second network device. In this process, accuracy of obtaining the phase information by the first network device can be improved, and processing power consumption of the terminal device can be reduced. Generally, the first network device has a stronger processing capability. Therefore, in this process, efficiency of obtaining the phase compensation information of the second network device can be further improved.

It should be noted that the implementation corresponding to FIG. 2C and/or the implementation corresponding to FIG. 2E may be combined with the implementation in FIG. 2A, and are/is performed before the first network device sends the phase compensation information to the M second network devices based on the phase information. Alternatively, the two implementations may be separately performed. This is not specifically limited in this embodiment of this application.

Optionally, the terminal device may directly send the phase information to the second network device, and the second network device determines the phase compensation information based on the phase information. In other words, step 206 and step 207 are replaced with step 206' (not shown in the figure): The terminal device sends the phase information to the second network device; and the second network device receives the phase information, and performs phase compensation based on the phase information.

For example, a second network device 1 directly receives phase information related to the second network device 1, and whether the second network device 1 is used as a reference plane is preset. The reference plane is a second network device that does not need phase compensation, and a non-reference plane is a second network device that needs phase compensation. Assuming that the second network device 1 is the non-reference plane, the second network device 1 may determine, based on the received phase information, a phase that needs to be compensated for the second network device 1.

According to the method steps, a process of determining the compensation phase of the second network device used as the reference plane can be reduced, and efficiency of implementing a phase compensation process can be improved.

For example, in this embodiment, the first indication information, the second indication information, the third indication information, the fourth indication information, the frequency indication information, and/or the phase compensation information are/is carried in a physical downlink shared channel (physical downlink shared channel, PDSCH), so that a limitation on a size of a resource occupied by the indication information is small and sending time is more flexible. Alternatively, the information may alternatively be carried in at least one of the following signaling: radio resource control (radio resource control, RRC) signaling, downlink control information (downlink control information, DCI) signaling, and a medium access control-control element (medium access control-control element, MAC-CE). This may be specifically determined based on a communication requirement or a communication occasion. Details are not described herein.

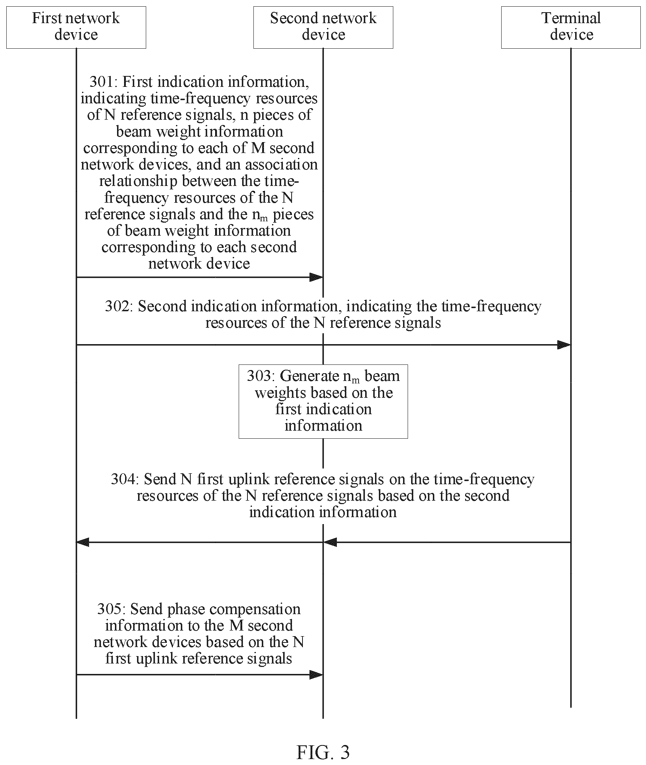

The foregoing embodiment describes an implementation method in which the first network device sends the first downlink reference signal to obtain the phase compensation information of the second network device through measurement. In some cases, the terminal device may alternatively send a first uplink reference signal to obtain the phase compensation information of the second network device through measurement. In addition, FIG. 3 is a flowchart of another communication method according to an embodiment of this application. As shown in FIG. 3, the method includes the following steps.

301: A first network device sends first indication information to M second network devices, where the first indication information indicates time-frequency resources of N reference signals, N pieces of beam weight information corresponding to each of the M second network devices, and an association relationship between the time-frequency resources of the N reference signals and the $n_m$ pieces of beam weight information corresponding to each second network device.

The association relationship indicates that weights of the second network device on the time-frequency resources of the N reference signals are respectively the $n_m$ beam weights; and M, $n_m$, and N are positive integers, $n_m$ is greater than 1 and less than or equal to N, M is greater than 1 and less than or equal to N, and n is less than or equal to N.

302: The first network device sends second indication information to the terminal device, where the second indication information indicates the time-frequency resources of the N reference signals; and

303: Each of the M second network devices receives the first indication information, and generates the $n_m$ beam weights based on the first indication information.

In this embodiment of this application, an implementation process of step 301 to step 303 is completely the same as that of step 201 to step 203. Details are not described herein again.

304: The terminal device receives the second indication information, and sends N first uplink reference signals on the time-frequency resources of the N reference signals based on the second indication information.

In this embodiment of this application, after receiving the second indication information, the terminal device sends the N first uplink reference signals to the first network device. The uplink reference signal may be specifically a channel sounding reference signal (sounding reference signal, SRS), or may be a physical random access channel (physical random access channel, PRACH), a random access signaling message 1 (message 1, msg1), or the like.

When (or after) sending the second indication information, the first network device may further indicate the terminal device to send the first uplink reference signal on the time-frequency resources of the N reference signals, to trigger implementation of step 304.

When the terminal device delivers the first downlink reference signal on the time-frequency resources of the N reference signals, the second network device synchronously generates a corresponding beam weight on the time-frequency resource. Therefore, step 303 and step 304 are performed in any sequence, depending on time indicated by the time-frequency resource.

305: The first network device receives the N first uplink reference signals, and sends phase compensation information to the M second network devices based on the N first uplink reference signals.

The first network device may receive the N first uplink reference signals sent by the terminal device on the time-frequency resources of the N reference signals. The N first uplink reference signals include signals that are reflected by the M second network devices based on the $n_m$ beam weights respectively corresponding to the M second network devices. The first network device may obtain phase information between every two second network devices through calculation based on the N first uplink reference signals. Then, phase compensation information of each second network device is obtained through calculation. Alternatively, the first network device may directly obtain phase compensation information of each second network device through calculation. For a specific calculation process, refer to related descriptions of step 205 in the foregoing embodiment, and details are not described herein again.

It can be learned that in this embodiment of this application, for a case in which a plurality of distributed second network devices reflect signals, the terminal device sends the N first uplink reference signals to obtain a phase difference between different second network devices through measurement, so that the terminal device can send an uplink reference signal in a timely manner when receiving the second indication information, thereby ensuring reliability of a communication process. In addition, the terminal device sends the uplink reference signal, so that operation pressure on the terminal device side is reduced, and overheads of the terminal device for feeding back the phase information is reduced. Then, the phase compensation information is sent to the second network device, so that the second network device performs phase compensation, to avoid or reduce signal cancellation, thereby implementing cooperative transmission between the plurality of second network devices. In this way, signal transmission efficiency is improved while arrangement costs of the second network device are controlled.

For example, sending the phase compensation information to the M second network devices includes: sending, to L second network devices in the M second network devices, phase compensation information corresponding to the L second network devices, where L is an integer not greater than M.

For example, the $n_m$ pieces of beam weight information indicated by the first indication information further include weight initial phase information. The $n_m$ pieces of beam weight information are indicated in at least one of the following manners: initial beam weight index information, index information of the weight initial phase information; initial beam weight quantization information, index information of the weight initial phase information; initial beam weight index information, quantization information of the weight initial phase information; initial beam weight quantization information, quantization information of the weight initial phase information; beam weight index information; beam weight quantization information; quantization information of the weight initial phase information; or index information of the weight initial phase information.

For example, before the first network device sends the first indication information to the M second network devices, the method further includes: The first network device receives capability information reported by the second network device, and determines the M second network devices based on the capability information, where the capability information indicates a capability of performing cooperative transmission by the second network device, and the capability of performing cooperative transmission is determined based on at least one of the following: panel information or physical position information of the second network device.

For example, the first indication information, the second indication information, the third indication information, the fourth indication information, the frequency indication information, and/or the phase compensation information are/is carried in at least one of the following signaling: radio resource control RRC signaling, downlink control information DCI signaling, a medium access control-control element MAC-CE, and a physical downlink shared channel PDSCH.

For detailed descriptions of the foregoing examples, refer to related descriptions of the embodiments corresponding to FIG. 2A to FIG. 2E, and details are not described herein again.

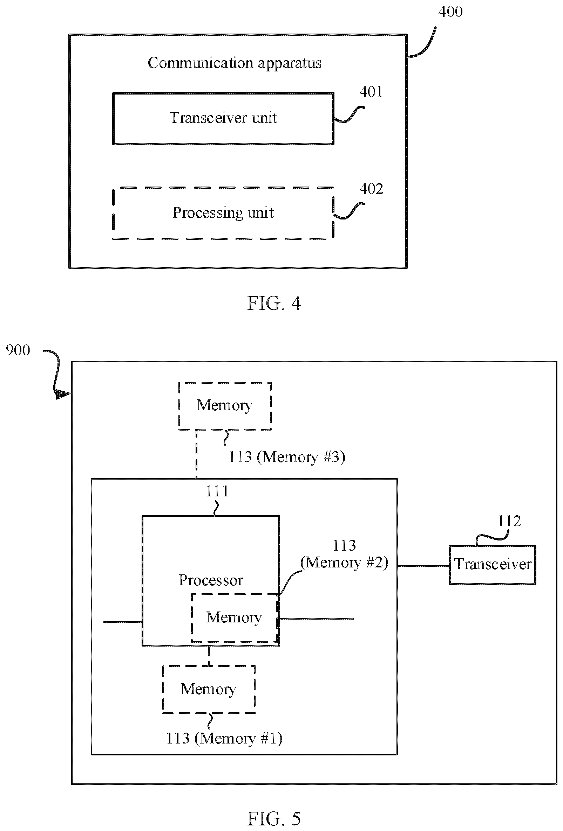

FIG. 4 shows a communication apparatus 400 according to an embodiment of this application. The communication apparatus includes a module or a unit configured to implement the method in the method embodiment and any possible design of the method embodiment in FIG. 2A or FIG. 3. The module or the unit may be a hardware circuit, may be software, or may be implemented by the hardware circuit in combination with the software. The communication apparatus may be a terminal device or a network device, or may be an apparatus (for example, a chip, a chip system, or a circuit) in the terminal device or the network device or an apparatus that can be used together with the terminal device or the network device. The apparatus may include a transceiver unit 401, or may further include a processing unit 402.

When the communication apparatus 400 is configured to implement the functions of the first network device in the method embodiment in FIG. 2A or FIG. 3,

the transceiver unit 401 is configured to send first indication information to M second network devices, where the first indication information indicates time-frequency resources of N reference signals, $n_m$ pieces of beam weight information corresponding to each of the M second network devices, and an association relationship between the time-frequency resources of the N reference signals and the $n_m$ pieces of beam weight information, where the association relationship indicates that weights of the second network device on the time-frequency resources of the N reference signals are respectively the $n_m$ beam weights; and M, $n_m$, m, and N are positive integers, m is less than or equal to M and greater than 1, M is greater than 1 and less than or equal to N, and $n_m$ is less than or equal to N; the transceiver unit 401 is further configured to send second indication information to a terminal device, where the second indication information indicates the time-frequency resources of the N reference signals;
the transceiver unit 401 is further configured to: send N first downlink reference signals on the time-frequency resources of the N reference signals, receive phase information from the terminal device, and send phase compensation information to the M second network devices based on the phase information, where the phase information is determined by the terminal device based on the N first downlink reference signals; or
the transceiver unit 401 is configured to: receive N first uplink reference signals sent by the terminal device on the time-frequency resources of the N reference signals, and send phase compensation information to the M second network devices based on the N first uplink reference signals.

When the communication apparatus 400 is configured to implement the functions of the second network device in the method embodiment in FIG. 2A or FIG. 3,

the transceiver unit 401 is configured to receive first indication information from a first network device, where the first indication information indicates time-frequency resources of N reference signals, $n_m$ pieces of beam weight information, and an association relationship between the time-frequency resources of the N reference signals and the $n_m$ pieces of beam weight information, where the association relationship indicates that weights of the second network device on the time-frequency resources of the N reference signals are respectively the $n_m$ beam weights; and M, $n_m$, and N are positive integers, m is less than or equal to M and greater than 1, M is greater than 1 and less than or equal to N, and $n_m$ is less than or equal to N;
the processing unit 402 is configured to generate the $n_m$ beam weights based on the first indication information; and
the transceiver unit 401 is further configured to receive phase compensation information from the first network device.

When the communication apparatus 400 is configured to implement the functions of the terminal device in the method embodiment in FIG. 2A or FIG. 3,

the transceiver unit 401 is configured to receive second indication information to a terminal device, where the second indication information indicates the time-frequency resources of the N reference signals;
the transceiver unit 401 is further configured to receive N first downlink reference signals sent by a first network device on the time-frequency resources of the N reference signals;
the processing unit 402 is configured to obtain phase information through calculation based on the N first downlink reference signals; and
the transceiver unit 401 is configured to send the phase information to the first network device.

For more detailed descriptions of the transceiver unit 401 and the processing unit 402, refer to related descriptions in the foregoing method embodiments, and details are not described herein again.
FIG. 5 is a diagram of a hardware structure of a communication apparatus according to an embodiment of this application. For the structure of the communication apparatus in FIG. 4, refer to the structure shown in FIG. 5. The communication apparatus 900 includes a processor 111 and a transceiver 112. The processor 111 and the transceiver 112 are electrically coupled.
The processor 111 is configured to execute a part or all of computer program instructions in a memory. When the part or all of the computer program instructions are executed, the apparatus is enabled to perform the method according to any one of the foregoing embodiments.
The transceiver 112 is configured to communicate with another device, for example, send first indication information to M second network devices, and send second indication information to a terminal device.
Optionally, the apparatus further includes a memory 113, configured to store the computer program instructions. Optionally, the memory 113 (a memory #1) is located inside the apparatus, and the memory 113 (a memory #2) is integrated with the processor 111, or the memory 113 (a memory #3) is located outside the apparatus.
It should be understood that the communication apparatus 900 shown in FIG. 5 may be a chip or a circuit, for example, a chip or a circuit disposed in a terminal apparatus or a communication apparatus. The transceiver 112 may alternatively be a communication interface. The transceiver includes a receiver and a transmitter. Further, the communication apparatus 900 may further include a bus system.
The processor 111, the memory 113, and the transceiver 112 are connected through the bus system. The processor 111 is configured to execute the instructions stored in the memory 113, to control the transceiver to receive a signal and send a signal, to complete steps of the first device or the second device in the implementation method in this application. The memory 113 may be integrated into the processor 111, or may be disposed separately from the processor 111.
In an implementation, it may be considered that a function of the transceiver 112 may be implemented by using a transceiver circuit or a dedicated transceiver chip. It may be considered that the processor 111 is implemented by using a dedicated processing chip, processing circuit, or processor, or a universal chip. The processor may be a central processing unit (central processing unit, CPU), a network processor (network processor, NP), or a combination of the CPU and the NP. The processor may further include a hardware chip or another general-purpose processor. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL) and another programmable logic device, a discrete gate or a transistor logic device, a discrete hardware component, or the like, or any combination thereof. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory described in this application aims to include but is not limited to these memories and any memory of another proper type.

An embodiment of this application provides a computer storage medium, storing a computer program. The computer program includes instructions for performing the method corresponding to the first network device or the second network device in the foregoing embodiment.

An embodiment of this application provides a computer storage medium, storing a computer program. The computer program includes instructions for performing the method corresponding to the terminal device in the foregoing embodiment.

An embodiment of this application provides a computer program product including instructions. When the computer program product runs on a computer, the computer is enabled to perform the method corresponding to the first network device or the second network device in the foregoing embodiment.

An embodiment of this application provides a computer program product including instructions. When the computer program product runs on a computer, the computer is enabled to perform the method corresponding to the terminal device in the foregoing embodiment.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation exceeds the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The modules described as separate parts may or may not be physically separate, and parts displayed as modules may or may not be physical modules, may be located in one position, or may be distributed on a plurality of network modules. Some or all the modules may be selected based on actual needs to achieve the objectives of the solutions of this embodiment.

In addition, functional modules in embodiments of this application may be integrated in one processing module, or each of the modules may exist alone physically, or two or more modules may be integrated in one module.

When the functions are implemented in the form of a software functional module and sold or used as an independent product, the functions may be stored in a computer-readable storage medium. Based on such an understanding, the technical solutions of this application essentially, the part contributing to the conventional technology, or a part of the technical solutions may be implemented in the form of a software product. The computer software product is stored in a storage medium, and includes several instructions for enabling a computer device (which may be a personal computer, a server, a network device, or the like) to perform all or some of the steps of the methods described in embodiments of this application. The foregoing storage medium includes any medium that can store program code, such as a USB flash drive, a removable hard disk drive, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:

   sending, by a first network device, first indication information to M second network devices, wherein the first indication information indicates time-frequency resources of N reference signals, $n_m$ pieces of beam weight information corresponding to each of the M second network devices, and an association relationship between the time-frequency resources of the N reference signals and the $n_m$ pieces of beam weight information, wherein the association relationship indicates that weights of the second network device on the time-frequency resources of the N reference signals are respectively the $n_m$ beam weights; and M, $n_m$, m, and N are positive integers, m is less than or equal to M and greater than 1, M is greater than 1 and less than or equal to N, and $n_m$ is less than or equal to N;

   sending, by the first network device, second indication information to a terminal device, wherein the second indication information indicates the time-frequency resources of the N reference signals; and

   sending, by the first network device, N first downlink reference signals on the time-frequency resources of the N reference signals, receiving phase information from the terminal device, and sending phase compensation information to the M second network devices based on the phase information, wherein the phase information is determined by the terminal device based on the N first downlink reference signals; or

   receiving, by the first network device, N first uplink reference signals sent by the terminal device on the time-frequency resources of the N reference signals, and sending phase compensation information to the M second network devices based on the N first uplink reference signals.

2. The method according to claim 1, wherein sending the phase compensation information to the M second network devices comprises:
   sending, to L second network devices in the M second network devices, phase compensation information corresponding to the L second network devices, wherein L is an integer not greater than M.

3. The method according to claim 1 or 2, wherein there are a total of T groups of phase information reported by the terminal device, and before sending the phase compensation information to the M second network devices based on the phase information, the method further comprises:

   receiving, by the first network device, feedback information from the terminal device, wherein the feedback information comprises a first association relationship between each group of the T groups of phase information and at least two of the first downlink reference signals; or

   sending, by the first network device, third indication information to the terminal device, wherein the third indication information indicates a first association relationship between each group of the T groups of phase information reported by the terminal device and at least two of the first downlink reference signals, where

   T is a positive integer.

4. The method according to claim 3, wherein after sending, by the first network device, the N first downlink reference signals on the time-frequency resources of the N reference signals, the method further comprises:

sending, by the first network device, frequency indication information to the terminal device, wherein the frequency indication information indicates an association relationship between each phase in each group of the T groups of phase information and a frequency unit of the first downlink reference signal.

5. The method according to any one of claims 1 to 4, wherein the $n_m$ pieces of beam weight information indicated by the first network device to the second network device further comprises weight initial phase information; and the $n_m$ pieces of beam weight information are indicated in at least one of the following manners:

   beam weight index information and index information of the weight initial phase information;
   beam weight quantization information and index information of the weight initial phase information;
   beam weight index information and quantization information of the weight initial phase information;
   beam weight quantization information and quantization information of the weight initial phase information;
   beam weight index information;
   beam weight quantization information;
   quantization information of the weight initial phase information; or
   index information of the weight initial phase information.

6. The method according to any one of claims 1 to 5, wherein $n_m$ pieces of beam weight information corresponding to at least one of the M second network devices comprise at least one piece of beam weight information indicated in an idle mode.

7. The method according to any one of claims 1 to 6, wherein before sending, by the first network device, the N first downlink reference signals on the time-frequency resources of the N reference signals, the method further comprises:

   sending, by the first network device, fourth indication information to the terminal device, wherein the fourth indication information indicates second weight initial phase information corresponding to time-frequency resources of the N downlink reference signals; and
   that the phase information is determined by the terminal device based on the N first downlink reference signals comprises: the phase information is determined by the terminal device based on the N first downlink reference signals and the second weight initial phase information.

8. The method according to any one of claims 1 to 7, wherein a difference between positions of any two time domain resources in the time-frequency resources of the N reference signals is less than a first time interval, and the first time interval is determined based on coherence time of the first network device.

9. The method according to any one of claims 1 to 8, wherein before sending, by the first network device, the first indication information to the M second network devices, the method further comprises:
   receiving, by the first network device, capability information reported by the second network device, and determining the M second network devices based on the capability information, wherein the capability information indicates a capability of performing cooperative transmission by the second network device, and the capability of performing cooperative transmission is determined based on at least one of the following: panel information or physical position information of the second network device.

10. The method according to any one of claims 1 to 9, wherein the first indication information, the second indication information, the third indication information, the fourth indication information, the frequency indication information, and/or the phase compensation information are/is carried in at least one of the following signaling: radio resource control RRC signaling, downlink control information DCI signaling, a medium access control-control element MAC-CE, and a physical downlink shared channel PDSCH.

11. A communication method, wherein the method comprises:

   receiving, by a second network device, first indication information from a first network device, wherein the first indication information indicates time-frequency resources of N reference signals, $n_m$ pieces of beam weight information, and an association relationship between the time-frequency resources of the N reference signals and the $n_m$ pieces of beam weight information, wherein the association relationship indicates that weights of the second network device on the time-frequency resources of the N reference signals are respectively the $n_m$ beam weights; and M, $n_m$, and N are positive integers, m is less than or equal to M and greater than 1, M is greater than 1 and less than or equal to N, and $n_m$ is less than or equal to N;

generating, by the second network device, the $n_m$ beam weights based on the first indication information; and
receiving, by the second network device, phase compensation information from the first network device.

12. The method according to claim 11, wherein the $n_m$ pieces of beam weight information indicated by the first indication information further comprises weight initial phase information, and the $n_m$ pieces of beam weight information are indicated in at least one of the following manners:

initial beam weight index information and index information of the weight initial phase information;
initial beam weight quantization information and index information of the weight initial phase information;
initial beam weight index information and quantization information of the weight initial phase information;
initial beam weight quantization information and quantization information of the weight initial phase information;
beam weight index information;
beam weight quantization information;
quantization information of the weight initial phase information; or
index information of the weight initial phase information.

13. The method according to claim 11 or 12, wherein the $n_m$ pieces of beam weight information comprise at least one piece of beam weight information indicated in an idle mode.

14. The method according to any one of claims 11 to 13, wherein before receiving, by the second network device, the first indication information sent by the first network device, the method further comprises:
reporting, by the second network device, capability information to the first network device, wherein the capability information indicates a capability of performing cooperative transmission by the second network device, and the capability of performing cooperative transmission is determined based on at least one of the following: panel information or physical position information of the second network device.

15. A communication method, wherein the method comprises:

receiving, by a terminal device, second indication information, wherein the second indication information indicates time-frequency resources of N reference signals;
receiving, by the terminal device, N first downlink reference signals sent by a first network device on the time-frequency resources of the N reference signals;
obtaining, by the terminal device, phase information through calculation based on the N first downlink reference signals; and
sending, by the terminal device, the phase information to the first network device.

16. The method according to claim 15, wherein there are T groups of phase information, and sending the phase information to the first network device further comprises: sending feedback information to the first network device, wherein the feedback information comprises a first association relationship between each group of the T groups of phase information and at least two of the first downlink reference signals; or
receiving third indication information from the first network device, and reporting the phase information based on a first association relationship that is indicated by the third indication information and that is between each group of the phase information and at least two of the first downlink reference signals.

17. The method according to claim 15 or 16, wherein after receiving, by the terminal device, the N first downlink reference signals from the first network device, the method further comprises:
receiving, by the terminal device, frequency indication information from the first network device, wherein the frequency indication information indicates an association relationship between each phase in each group of the T groups of phase information and a frequency unit of the first downlink reference signal.

18. The method according to any one of claims 15 to 17, wherein before receiving, by the terminal device, the N first downlink reference signals from the first network device, the method further comprises:

receiving, by the terminal device, fourth indication information from the first network device, wherein the fourth indication information indicates second weight initial phase information corresponding to time-frequency resources of the N downlink reference signals; and
obtaining, by the terminal device, the phase information through calculation based on the N first downlink reference signals comprises:

obtaining, by the terminal device, the phase information through calculation based on the N first downlink reference signals and the second weight initial phase information.

19. A communication method, wherein the method comprises:

sending, by a first network device, first indication information to M second network devices, wherein the first indication information indicates time-frequency resources of N reference signals, $n_m$ pieces of beam weight information corresponding to each of the M second network devices, and an association relationship between the time-frequency resources of the N reference signals and the $n_m$ pieces of beam weight information, wherein the association relationship indicates that weights of the second network device on the time-frequency resources of the N reference signals are respectively the $n_m$ beam weights; and M, $n_m$, m, and N are positive integers, m is less than or equal to M and greater than 1, M is greater than 1 and less than or equal to N, and $n_m$ is less than or equal to N;

sending, by the first network device, second indication information to a terminal device, wherein the second indication information indicates the time-frequency resources of the N reference signals;

receiving, by each of the M second network devices, the first indication information, and generating the $n_m$ beam weights based on the first indication information;

sending, by the first network device, N first downlink reference signals on the time-frequency resources of the N reference signals;

receiving, by the terminal device, the N first downlink reference signals, determining phase information based on the N first downlink reference signals, and sending the phase information to the first network device; and

receiving, by the first terminal device, the phase information, and sending phase compensation information to the M second network devices based on the phase information.

20. A communication method, wherein the communication method comprises:

sending, by a first network device, first indication information to M second network devices, wherein the first indication information indicates time-frequency resources of N reference signals, $n_m$ pieces of beam weight information corresponding to each of the M second network devices, and an association relationship between the time-frequency resources of the N reference signals and the $n_m$ pieces of beam weight information, wherein the association relationship indicates that weights of the second network device on the time-frequency resources of the N reference signals are respectively the $n_m$ beam weights; and M, $n_m$, m, and N are positive integers, m is less than or equal to M and greater than 1, M is greater than 1 and less than or equal to N, and $n_m$ is less than or equal to N;

sending, by the first network device, second indication information to a terminal device, wherein the second indication information indicates the time-frequency resources of the N reference signals;

receiving, by each of the M second network devices, the first indication information, and generating the $n_m$ beam weights based on the first indication information;

receiving, by the terminal device, the second indication information, and sending N first uplink reference signals on the time-frequency resources of the N reference signals based on the second indication information; and

receiving, by the first network device, the N first uplink reference signals, and sending phase compensation information to the M second network devices based on the N first uplink reference signals.

21. A communication system, wherein the system comprises:

a first network device, configured to send first indication information to M second network devices, wherein the first indication information indicates time-frequency resources of N reference signals, $n_m$ pieces of beam weight information corresponding to each of the M second network devices, and an association relationship between the time-frequency resources of the N reference signals and the $n_m$ pieces of beam weight information, wherein the association relationship indicates that weights of the second network device on the time-frequency resources of the N reference signals are respectively the $n_m$ beam weights; and M, $n_m$, m, and N are positive integers, m is less than or equal to M and greater than 1, M is greater than 1 and less than or equal to N, and $n_m$ is less than or equal to N, wherein

the first network device is further configured to send second indication information to a terminal device, wherein the second indication information indicates the time-frequency resources of the N reference signals;

each of the M second network devices is configured to receive the first indication information, and generate the $n_m$ beam weights based on the first indication information; and

the first network device is further configured to send N first downlink reference signals on the time-frequency resources of the N reference signals; and

the terminal device, configured to receive the N first downlink reference signals, determine phase information based on the N first downlink reference signals, and send the phase information to the first network device, wherein

the first network device is further configured to receive the phase information, and send phase compensation information to the M second network devices based on the phase information.

22. A communication system, wherein the system comprises:

a first network device, configured to send first indication information to M second network devices, wherein the first indication information indicates time-frequency resources of N reference signals, $n_m$ pieces of beam weight information corresponding to each of the M second network devices, and an association relationship between the time-frequency resources of the N reference signals and the $n_m$ pieces of beam weight information, wherein the association relationship indicates that weights of the second network device on the time-frequency resources of the N reference signals are respectively the $n_m$ beam weights; and M, $n_m$, m, and N are positive integers, m is less than or equal to M and greater than 1, M is greater than 1 and less than or equal to N, and $n_m$ is less than or equal to N, wherein

the first network device is further configured to send second indication information to a terminal device, wherein the second indication information indicates the time-frequency resources of the N reference signals; and

each of the M second network devices is configured to receive the first indication information, and generate the $n_m$ beam weights based on the first indication information; and

the terminal device, configured to receive the second indication information, and send N first uplink reference signals on the time-frequency resources of the N reference signals based on the second indication information, wherein

the first network device is further configured to receive the N first uplink reference signals, and send phase compensation information to the M second network devices based on the N first uplink reference signals.

23. A communication apparatus, wherein the communication apparatus comprises a module configured to perform the method according to any one of claims 1 to 10, or comprises a module configured to perform the method according to any one of claims 11 to 14, or comprises a module configured to perform the method according to any one of claims 15 to 18.

24. A communication apparatus, wherein the communication apparatus comprises at least one processor, wherein the processor is configured to execute a computer program or instructions to implement the method according to any one of claims 1 to 10, or implement the method according to any one of claims 11 to 14, or implement the method according to any one of claims 15 to 18.

25. A computer-readable storage medium, comprising instructions, wherein when the instructions run on a communication apparatus, the method according to any one of claims 1 to 10 is performed, or the method according to any one of claims 11 to 14 is performed, or the method according to any one of claims 15 to 18 is performed.

26. A communication system, wherein the communication system comprises a terminal device configured to perform the method according to any one of claims 1 to 10, a first access network device configured to perform the method according to any one of claims 11 to 14, and a second access network device configured to perform the method according to any one of claims 15 to 18.

27. A computer program product, wherein the computer program product comprises computer instructions; and when some or all of the computer instructions run on a computer, the method according to any one of claims 1 to 10 is performed, or the method according to any one of claims 11 to 14 is performed, or the method according to any one of claims 15 to 18 is performed.

Access network
device

Access network
device 2

Terminal device

FIG. 1A

(a)                          (b)

FIG. 1B

| First network device | Second network device | Terminal device |

201: First indication information, indicating time-frequency resources of N reference signals, $n_m$ pieces of beam weight information corresponding to each of M second network devices, and an association relationship between the time-frequency resources of the N reference signals and the $n_m$ pieces of beam weight information corresponding to each second network device

202: Second indication information, indicating the time-frequency resources of the N reference signals

203: Generate $n_m$ beam weights based on the first indication information

204: Send N first downlink reference signals on the time-frequency resources of the N reference signals

205: Determine phase information based on the N first downlink reference signals

206: Phase information

207: Phase compensation information

FIG. 2A

FIG. 2B

2061: Feedback information, where the feedback information includes a first association relationship between each group of T groups of phase information and at least two of first downlink reference signals

2062: Determine a second association relationship between each group of the T groups of phase information and two second network devices based on the first association relationship

2063: Determine, based on the second association relationship and the phase information, phase compensation information corresponding to each of M second network devices

FIG. 2C

Second association relationship

T groups of phase information

(Phase information 11, phase information 12)

First association relationship

(Reference signal 1, reference signal 2)

(IRS 1, IRS 2)

(Phase information 21, phase information 22)

(Reference signal 1, reference signal 3)

(IRS 1, IRS 3)

(Phase information 31, phase information 32)

(Reference signal 2, phase information 3)

(IRS 2, IRS 3)

...

...

...

(Phase information T1, phase information T2)

(Reference signal N−1, reference signal N)

(IRS M−1, IRS M)

Determine phase compensation information of each IRS

FIG. 2D

| First network device | | Second network device | | Terminal device |

2071: Third indication information, indicating a first association relationship between each group of T groups of phase information reported by the terminal device and at least two of first downlink reference signals

2072: Report the T groups of phase information based on the third indication information

2073: Determine a second association relationship between each group of the T groups of phase information and two second network devices based on the first association relationship

2074: Determine, based on the second association relationship and the phase information, phase compensation information corresponding to each of M second network devices

FIG. 2E

| First network device | Second network device | Terminal device |
|---|---|---|

301: First indication information, indicating time-frequency resources of N reference signals, n pieces of beam weight information corresponding to each of M second network devices, and an association relationship between the time-frequency resources of the N reference signals and the $n_m$ pieces of beam weight information corresponding to each second network device

302: Second indication information, indicating the time-frequency resources of the N reference signals

303: Generate $n_m$ beam weights based on the first indication information

304: Send N first uplink reference signals on the time-frequency resources of the N reference signals based on the second indication information

305: Send phase compensation information to the M second network devices based on the N first uplink reference signals

FIG. 3

400

Communication apparatus

401

Transceiver unit

402

Processing unit

FIG. 4

900

Memory

113 (Memory #3)

111

Processor

113
(Memory #2)

Transceiver

112

Memory

Memory

113 (Memory #1)

FIG. 5

## INTERNATIONAL SEARCH REPORT

| International application No. |
|---|
| **PCT/CN2023/142020** |

| A. | CLASSIFICATION OF SUBJECT MATTER |
|---|---|
| | H04W40/02(2009.01)i;  H04W72/04(2023.01)i |

According to International Patent Classification (IPC) or to both national classification and IPC

| B. | FIELDS SEARCHED |
|---|---|

Minimum documentation searched (classification system followed by classification symbols)

IPC:H04W; H04L

Documentation searched other than minimum documentation to the extent that such documents are included in the fields searched

Electronic data base consulted during the international search (name of data base and, where practicable, search terms used)

CNABS; CNTXT; CNKI; VEN; ENTXT; ENTXTC; 3GPP: 指示, 参考信号, SRS, CSI-RS, 波束, 权值, 时频, 时域, 频域, 关联, 关系, 索引, 相位, 补偿, 初相, 初始相位, 反馈, 频率, 量化, 空闲态, DCI, RRC, MAC-CE, indication, reference signal, beam, weight, time, frequency, relationship, association, index, phase, initial phase, feedback, quantification, idle

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 111698005 A (HUAWEI TECHNOLOGIES CO., LTD.) 22 September 2020 (2020-09-22) description, paragraphs [0051]-[0191] | 15, 23-27 |
| A | CN 113949468 A (HUAWEI TECHNOLOGIES CO., LTD.) 18 January 2022 (2022-01-18) entire document | 1-27 |
| A | EP 2930966 A1 (ALCATEL LUCENT) 14 October 2015 (2015-10-14) entire document | 1-27 |
| A | WO 2020088168 A1 (HUAWEI TECHNOLOGIES CO., LTD.) 07 May 2020 (2020-05-07) entire document | 1-27 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 March 2024** | **25 March 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

| | International application No.<br>**PCT/CN2023/142020** |
|---|---|

| Patent document<br>cited in search report | Publication date<br>(day/month/year) | Patent family member(s) | Publication date<br>(day/month/year) |
|---|---|---|---|
| CN 111698005 A | 22 September 2020 | None | |
| CN 113949468 A | 18 January 2022 | None | |
| EP 2930966 A1 | 14 October 2015 | EP 2930966 B1 | 07 October 2020 |
| WO 2020088168 A1 | 07 May 2020 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211733757